(19) Europäisches Patentamt
European Patent Office
Office européen des brevets

(11) EP 1 104 239 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(21) Anmeldenummer: **99942833.7**

(22) Anmeldetag: **10.08.1999**

(51) Int Cl.[7]: **A01N 47/36**
// (A01N47/36, 57:20, 57:14, 47:36, 47:06, 43:90, 43:82, 43:80, 43:76, 43:70, 43:50, 43:40, 43:10, 41:10, 39:02, 37:40, 37:26, 37:22, 35:10), A01N33:18

(86) Internationale Anmeldenummer:
**PCT/EP1999/005800**

(87) Internationale Veröffentlichungsnummer:
**WO 2000/008932 (24.02.2000 Gazette 2000/08)**

(54) **HERBIZIDE MITTEL MIT ACYLIERTEN AMINOPHENYLSULFONYLHARNSTOFFEN**

HERBICIDES WITH ACYLATED AMINOPHENYLSULFONYL UREA

AGENTS HERBICIDES CONTENANT DES AMINOPHENYLSULFONYLUREES ACYLEES

(84) Benannte Vertragsstaaten:
**AT BE CH CY DE DK ES FI FR GB GR IE IT LI LU MC NL PT SE**
Benannte Erstreckungsstaaten:
**RO SI**

(30) Priorität: **13.08.1998 DE 19836725**
**30.04.1999 DE 19919853**

(43) Veröffentlichungstag der Anmeldung:
**06.06.2001 Patentblatt 2001/23**

(73) Patentinhaber: **Bayer CropScience GmbH**
**65929 Frankfurt/Main (DE)**

(72) Erfinder:
- **HACKER, Erwin**
  **D-65239 Hochheim (DE)**
- **BIERINGER, Hermann**
  **D-65817 Eppstein (DE)**
- **SCHNABEL, Gerhard**
  **D-63868 Gro wallstadt (DE)**

(56) Entgegenhaltungen:
**WO-A-94/10154**
**WO-A-95/29899**
**WO-A-96/09303**
**WO-A-96/14747**
**WO-A-97/10714**
**DE-A- 19 520 839**
**DE-A- 19 642 082**
**DE-A- 19 650 955**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 104 239 B1

Printed by Jouve, 75001 PARIS (FR)

## Beschreibung

Die Erfindung liegt auf dem technischen Gebiet der Pflanzenschutzmittel, die gegen Schadpflanzen in Pflanzenkulturen eingesetzt werden können und als Herbizidwirkstoffe eine Kombination von mindestens zwei Herbiziden enthalten.

Aus DE-A-196 42 082 sind herbizide Mittel auf Basis von 1-(4-Chlor-5-difluormethoxy-1-methyl-3-pyrazolyl)-5-(1,3-dioxan-2-yl)-1H-pyrazol-4-carbonitril bekannt. Aus DE-A-196 50 955, DE-A-195 20 839, WO 97/10714 und WO 94/10154 sind herbizide Mittel auf Basis von speziellen Sulfonylhamstoffen bekannt.

Aus der Druckschrift WO 95/M29899 sind acylierte Aminophenylsulfonylharnstoffe und deren Salze sowie deren Verwendung als Herbizide und/oder Pflanzenwachstumsregulatoren bekannt. Unter Verbindungen dieser Strukturklasse sind von besonderem Interesse die Verbindungen der Formel (I) und deren Salze, worin

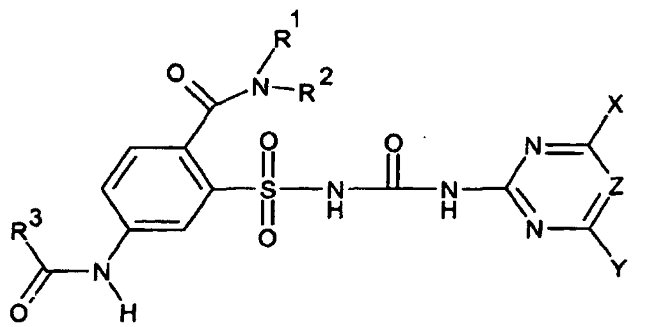

(I)

worin

- $R^1$ Wasserstoff oder $(C_1-C_4)$Alkyl, vorzugsweise Methyl oder Ethyl, insbesondere Methyl,
- $R^2$ Wasserstoff oder $(C_1-C_4)$Alkyl, vorzugsweise Methyl oder Ethyl, insbesondere Methyl,
- $R^3$ H, $(C_1-C_4)$Alkyl, $(C_1-C_4)$Alkoxy, $(C_2-C_4)$Alkenoxy, $(C_2-C_4)$Alkinoxy, $(C_3-C_6)$Cycloalkyl, wobei jeder der 5 letztgenannten Reste unsubstituiert oder durch einen oder mehrere Reste aus der Gruppe Halogen, Cyano, $(C_1-C_4)$ Alkoxy und $(C_1-C_4)$Alkylsulfonyl substituiert ist,
  vorzugsweise Wasserstoff, Methyl, Trifluormethyl, Ethyl, n-Propyl, Isopropyl, Cyclopropyl, Methoxy oder Ethoxy, vorzugsweise Wasserstoff, Methyl oder Methoxy, insbesondere Wasserstoff,

einer der Reste X und Y Halogen, $(C_1-C_4)$Alkyl, $(C_1-C_4)$Alkoxy, $(C_1-C_4)$Alkylthio, wobei jeder der drei letztgenannten Reste unsubstituiert oder durch einen oder mehrere Reste aus der Gruppe Halogen, $(C_1-C_4)$Alkoxy und $(C_1-C_4)$Alkylthio substituiert ist,
und der andere der Reste X und Y $(C_1-C_4)$Alkyl, $(C_1-C_4)$Alkoxy oder $(C_1-C_4)$Alkylthio, wobei jeder der drei letztgenannten Reste unsubstituiert oder durch einen oder mehrere Reste aus der Gruppe Halogen, $(C_1-C_4)$Alkoxy und $(C_1-C_4)$ Alkylthio substituiert ist,

insbesondere X und Y jeweils Methoxy, und

- Z CH oder N, insbesondere CH bedeuten.

Die Wirksamkeit dieser Herbizide gegen Schadpflanzen in den Pflanzenkulturen liegt auf einem hohen Niveau, hängt jedoch im allgemeinen der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbzide oder geographisch begrenzt auftreten können. Wirkungsverluste bei einzelnen Pflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höhere Aufwandmenge nicht eintritt. Teilweise kann die Selektivität in Kulturen durch Zusatz von Safenem verbessert werden. Generell besteht jedoch immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzefapplikation der zu kombinierenden Wirkstoffe erlaubt.
Überraschenderweise wurde nun gefunden, daß Wirkstoffe aus der Gruppe der genannten Herbizide der Formel (I) oder deren Salzen in Kombination mit bestimmten strukturell anderen Herbiziden in besonders günstiger Weise zusammenwirken, wenn sie in Pflanzenkulturen eingesetzt werden, die für die selektive Anwendung der Herbizide, gegebenenfalls unter Zusatz von Safeners, geeignet sind.
Gegenstand der Erfindung sind somit Herbizid-Kombinationen mit einem wirksamen Gehalt an Komponenten (A) und (B), wobei

(A) ein oder mehrere Herbizide aus der Gruppe der oben genannten Verbindungen der Formel (I) oder deren Salzen bedeutet,
und
(B) ein oder mehrere Herbizide aus der Gruppe der Verbindungen, bestehend aus

(B1) selektiv in Getreide und einigen dikotylen Kulturen gegen monokotyle und dikotyle Schadpflanzen wirksamen Herbiziden mit Blatt- und Bodenwirkung aus der Gruppe
(B1.1.1) Alachlor, (B1.1.2) Metolachlor, (B1.1.3) Acetochior, (B1.1.4) Dimethenamid, (B1.1.5) Pethoxamid, (B1.2.1) Atrazin, (B1.2.2) Simazin, (B1.2.3) Cyanazin, (B1.2.4) Terbuthylazin, (B1.2.5) Metribuzin, (B1.2.6) Isoxaflutole, (B1.2.7) Fluthiamid, (B1.2.8) Terbutryn, (B1.3.1) Nicosulfuron, (B1.3.2) Rimsulfuron, (B1.3.3) Primisulfuron, (B1.4.1) Pendimethalin, (B1.4.2) Sulcotrione, (B1.4.3) Dicamba, (B1.4.4) Mesotrione, (B1.4.5) Linuron, (B1.4.6) Isoxachtortote, (B1.4.7) Benoxacor, (B1.5.1) Metosulam, (B1.5.2) Flumetsulam, (B1.5.3) Cloransulam, (B1.5.4) Florasulam, (B1.6.1) Molinate, (B1.6.2) Thiobencarb, (B1.6.3) Quinchlorac, (B1.6.4) Propanil, (B1.6.5) Pyribenzoxim, (B1.6.6) Butachlor, (B1.6.7) Pretilachlor, (B1.6.8) Clomazone, (B1.6.9) Oxadiargyl, (B1.6.10) Oxaziclomefone, (B1.6.11) Anilofos, (B1.6.12) Cafenstrole, (B1.6.13), Mefenacet (B1.6.14) Fentrazamid, (B1.6.15) Thiazopyr, (B1.6.16) Triclopyr, (B1.6.17) Oxadiazone, (B1.6.18) Esprocarb, (B1.6.19) Pyributicarb, (B1.6.20) Azimsulfuron, (B1.6.21) EP 913, (B1.6.22) Thenylchlor, (B1.6.23) Pentoxazone, (B1.6.24) Pyriminobac, (B1.6.25) OK 9701, (B1.6.26) Quizalofop/Quizalofop-P, (B1.6.27) Fenoxaprop/Fenoxaprop-P, (B1.6.28) Fluazifop/Fluazifop-P, (B1.6.29) Haloxyfop / Haloxyfop-P, (B1.6.30) Propaquizafop, (B1.6.31) Clodinafop, (B1.6.32) Cyhalofop, (B1.6.33) Sethoxydim, (B1.6.34) Cycloxydim, (B1.6.35) Clethodim, (B1.6.36) Clefoxidim, (B1.7.1) Isoproturon, (B1.7.2) Chlortuloron, (B1.7.3) Prosulfocarb, (B1.7.4) MON 48500, (B1.7.5) Diclofop/Diclofop-P, (B1.7.6) Imazamethabenz, (B1.7.7) Triasulfuron, (B1.7.8) Flupyrsulfuron, (B1.7.9) US 315,
(B2) selektiv in Getreide und einigen dikotylen Kulturen gegen überwiegend dikotyle Schadpflanzen wirksamen Herbiziden aus der Gruppe
(B2.1.1) MCPA, (B2.1.2) 2,4-D, (B2.2.1) Bromoxynil, (B2.3.1) Bentazone, (B2.3.2) Fluthiacet, (B2.3.3) Pyridate, (B2.3.4) Diflufenzopyr, (B2.3.5) Carfentrazone, (B2.3.6) Clopyralid, (B2.4.1 ) Halosulfuron, (B2.4.2) Thifensulfuron, (B2.4.3) Prosulfuron, (B2.4.4) Iodosulfuron, (B2.4.5) Tritosulfuron, (B2.4.6) Sulfosulfuron, (B2.5.1) 2,4-D, (B2.5.2) MCPA, (B2.5.3) Bensulfuron, (B2.5.4) Methsulfuron, (B2.5.6) Acifluorfen, (B2.5.7) Bispyribac, (B2.5.8) Ethoxysulfuron, (B2.5.9) Cinosulfuron, (B2.5.10) Pyrazosulfuron, (B2.5.11) Imazosulfuron, (B2.5.12) Cyclosulfamuron, (B2.5.13) Chlorsulfuron, (B2.5.14) Bromobutide, (B2.5.15) Bentazon, (B2.5.16) Benfuresate, (B.2.5.17) Chlorimuron, (B2.6.1) Diflufenican, (B2.6.2) Flurtamone, (B2.6.3) Tribenuron, (B.2.6.4) Amidosulfuron, (B2.6.5)Mecoprop/Mecoprop-p, (B2.6.6) Dichlorprop/Dichlorprop-P, (B2.6.7) Fluroxypyr, (B2.6.8) Picloram, (B2.6.9) Ioxynil, (B2.6.10) Bifenox, (B2.6.11) Pyraflufen-ethyl, (B.2.6.12) Fluoroglycofen-ethyl, (B2.6.13) Cinidon-ethyl, (B2.6.14) Picolinofen, und
(B3) gegen monokotyle und dikotyle Schadpflanzen wirksamen Herbiziden für den Einsatz im nichtselektiven Bereich oder in spezifisch toleranten Kulturen aus der Gruppe
(B3.1) Glufosinate, (B3.2) Glyphosate, (B3.3.1) Imazapyr, (B3.3.2) Imazethapyr, (B3.3.3) Imazamethabenz, (B3.3.4) Imazamethabenz-methyl, (B3.3.5) Imazamox, (B3.3.6) Imazaquin und (B3.3.7) Imazapic bedeutet.

Die erfindungsgemäßen Herbizid-Kombinationen können weitere Komponenten enthalten, z. B. Pflanzenschutzmittelwirkstoffe anderer Art und/oder im Pflanzenschutz übliche Zusatzstoffe und/oder Formulierungshilfsmitteln, oder zusammen mit diesen eingesetzt werden.
Die synergistischen Wirkungen werden bei gemeinsamer Ausbringung der Wirkstoffe (A) und (B) beobachtet,

können jedoch auch häufig auch bei zeitlich versetzter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mitteleren oder späten Nachauflauf. Bevorzugt ist dabei die gemeinsame oder die zeitnahe Anwendung der Wirkstoffe der jeweiligen Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

Die genannte Formel (I) umfaßt alle Stereoisomeren und deren Gemische, insbesondere auch racemische Gemische, und - soweit Enantiomere möglich sind - das jeweils biologisch wirksame Enantiomere. Beispiele für Wirkstoffe der Formel (I) sind Verbindungen der Formel (A1) und deren Salze

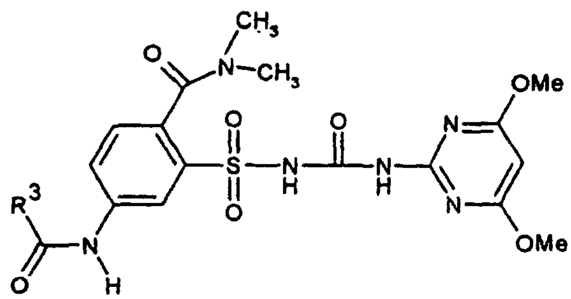

(A1)

worin $R^3$ definiert ist wie in Formel (I) und Me = Methyl ist, vorzugsweise die Verbindungen (A1.1) bis (A1.6)

(A1.1) N-[N-(4,6-Dimethoxypyrimidin-2-yl)-aminocarbonyl]-2-(dimethylaminocarbonyl)-5-(formylamino)-benzolsulfonamid,
d.h. Formel (A1) mit $R^3$ =Wasserstoff, und dessen Salze;

(A1.2) N-[N-(4,6-Dimethoxypyrimidin-2-yl)-aminocarbonyl]-2-(dimethylaminocarbonyl)-5-(acetylamino)-benzolsulfonamid,
d.h. Formel (A1) mit $R^3$ =Methyl, und dessen Salze;

(A1.3) N-[N-(4,6-Dimethoxypyrimidin-2-yl)-aminocarbonyl]-2-(dimethylaminocarbonyl)-5-(propionylamino)-benzolsulfonamid,
d.h. Formel (A1) mit $R^3$ =Ethyl, und dessen Salze;

(A1.4) N-[N-(4,6-Dimethoxypyrimidin-2-yl)-aminocarbonyl]-2-(dimethylaminocarbonyl)-5-(isopropylcarbonylamino)-benzolsulfonamid,
d.h. Formel (A1) mit $R^3$ =Isopropyl, und dessen Salze;

(A1.5) N-[N-(4,6-Dimethoxypyrimidin-2-yl)-aminocarbonyl]-2-(dimethylaminocarbonyl)-5-(methoxycarbonylamino)-benzolsulfonamid,
d.h. Formel (A1) mit $R^3$ =Methoxy, und dessen Salze;

(A1.6) N-[N-(4,6-Dimethoxypyrimidin-2-yl)-aminocarbonyl]-2-(dimethylaminocarbonyl)-5-(ethoxycarbonylamino)-benzolsulfonamid,
d.h. Formel (A1) mit $R^3$ =Ethoxy, und dessen Salze;

Weitere Beispiele für Wirkstoffe der Formel (I) sind Verbindungen der Formel (A2) und deren Salze

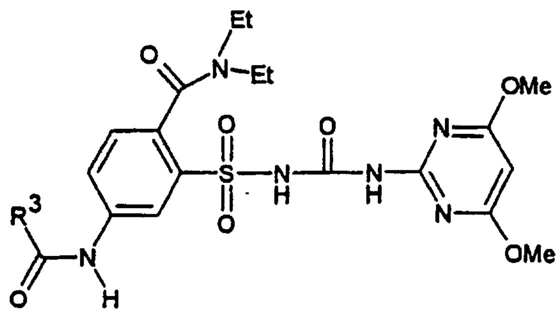

(A2)

worin $R^3$ definiert ist wie in Formel (I) und Me = Methyl und Et = Ethyl bedeuten, vorzugsweise die Verbindungen (A2.1) bis (A2.6)

(A2.1) N-[N-(4,6-Dimethoxypyrimidin-2-yl)-aminocarbonyl]-2-(diethylaminocarbonyl)-5-(formylamino)-benzolsulfonamid,
d.h. Formel (A2) mit $R^3$ =Wasserstoff, und dessen Salze;

(A2.2) N-[N-(4,6-Dimethoxypyrimidin-2-yl)-aminocarbonyl]-2-(diethylaminocarbonyl)-5-(acetylamino)-benzolsulfonamid,
d.h. Formel (A2) mit $R^3$ =Methyl, und dessen Salze;

(A2.3) N-[N-(4,6-Dimethoxypyrimidin-2-yl)-aminocarbonyl]-2-(diethylaminocarbonyl)-5-(propionylamino)-benzolsulfonamid,
d.h. Formel (A2) mit $R^3$ =Ethyl, und dessen Salze;

(A2.4) N-[N-(4,6-Dimethoxypyrimidin-2-yl)-aminocarbonyl]-2-(diethylaminocarbonyl)-5-(isopropylcarbonylamino)-benzolsulfonamid,
d.h. Formel (A2) mit $R^3$ =Isopropyl, und dessen Salze;

(A2.5) N-[N-(4,6-Dimethoxypyrimidin-2-yl)-aminocarbonyl]-2-(diethylaminocarbonyl)-5-(methoxycarbonylamino)-benzolsulfonamid,
d.h. Formel (A2) mit $R^3$ =Methoxy, und dessen Salze;

(A2.6) N-[N-(4,6-Dimethoxypyrimidin-2-yl)-aminocarbonyl]-2-(diethylaminocarbonyl)-5-(ethoxycarbonylamino)-benzolsulfonamid,
d.h. Formel (A2) mit $R^3$ =Ethoxy, und dessen Salze;

Weitere Beispiele für Wirkstoffe der Formel (I) sind Verbindungen der Formel (A3) und deren Salze

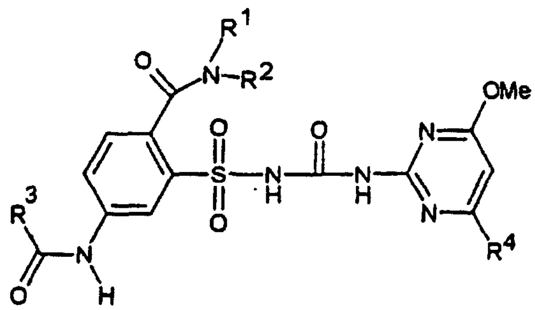

(A3)

worin $R^1$, $R^2$ und $R^3$ wie in Formel (I) definiert sind und Me = Methyl bedeutet und $R^4$ = Methoxy, Chlor oder Methyl ist, vorzugsweise die Verbindungen (A3.1) bis (A3.6)

(A3.1) N-[N-(4-Methoxy-6-methyl-pyrimidin-2-yl)-aminocarbonyl]-2-(dirnethylaminocarbonyl)-5-(formylamino)-benzolsulfonamid,
d.h. Formel (A3) mit $R^3$ =Wasserstoff und $R^1$ = $R^2$= Methyl, und dessen Salze;

(A3.2) N-[N-(4-Methoxy-6-methyl-pyrimidin-2-yl)-aminocarbonyl]-2-(dimethylaminocarbonyl)-5-(acetylamino)-benzolsulfonamid,
d.h. Formel (A3) mit $R^3$ =Methyl und $R^1$ = $R^2$ = Methyl, und dessen Salze;

(A3.3) N-[N-(4-Methoxy-6-methyl-pyrimidin-2-yl)-aminocarbonyl]-2-(dirnethylaminocarbonyl)-5-(methoxycarbonyl)-benzolsulfonamid,
d.h. Formel (A3) mit $R^3$ =Methoxy und $R^1$ = $R^2$ = Methyl, und dessen Salze;

(A3.4) N-[N-(4-Methoxy-6-methy)-pyrimidin-2-yl)-aminocarbonyl]-2-(diethylaminocarbonyl)-5-(formylamino)-benzolsulfonamid,
d.h. Formel (A3) mit $R^3$ =Wasserstoff und $R^1$ = $R^2$ = Ethyl, und dessen Salze;

(A3.4) N-[N-(4-Methoxy-6-methyl-pyrimidin-2-yl)-aminocarbonyl]-2-(diethylaminocarbonyl)-5-(acetylamino)-benzolsulfonamid,
d.h. Formel (A3) mit $R^3$ =Methyl und $R^1$ = $R^2$ = Ethyl, und dessen Salze;

(A3.5) N-[N-(4-Methoxy-6-methyl-pyrimidin-2-yl)-aminocarbonyl]-2-(diethylaminocarbonyl)-5-(methoxycarbonyl)-benzolsulfonamid,
d.h. Formel (A3) mit $R^3$ =Methoxy und $R^1$ = $R^2$ = Ethyl, und dessen Salze.

Die genannten Herbizide der Formel (I) und deren Salze hemmen das Enzym Acetolactatsynthase (ALS) und damit die Proteinsynthese in Pflanzen. Die Aufwandmenge der Herbizide der Formel (I) kann in einem weiten Bereich variieren, beispielsweise zwischen 0,001 und 0,5 kg AS/ha (AS/ha bedeutet dabei im folgenden "Aktivsubstanz pro Hektar" = bezogen auf 100%igen Wirkstoff). Bei Anwendungen mit Aufwandmengen von 0,01 bis 0,1 kg AS/ha der Herbizide der Formel (I), vorzugsweise der Formeln (A1), (A2) oder (A3), insbesondere (A1), wird im Vor- und Nachauflaufverfahren ein relativ breites Spektrum an annuellen und perennierenden Unkräutern, Ungräsem sowie Cyperaceen bekämpft. Bei den erfindungsgemäßen Kombinationen liegen die Aufwandmengen in der Regel niedriger, z. B. im Bereich von 0,5 bis 120 g AS/ha, vorzugsweise 2 bis 80 g AS/ha.
Die Wirkstoffe könne in der Regel als wasserlösliches Spritzpulver (WP), wasserdispergierbares Granulat (WDG), wasseremulgierbares Granulat (WEG), Suspoemulsion (SE) oder Ölsuspensionskonzentrat (SC) formuliert werden.

Zur Anwendung der Wirkstoffe der Formel (I) oder deren Salzen in Pflanzenkulturen ist es je nach Pflanzenkultur zweckmäßig, ab bestimmter Aufwandmengen einen Safener zu applizieren, um Schäden an der Kulturpflanze zu reduzieren oder zu vermeiden. Beispiele für geeignete Safener sind solche, die in Kombination mit Sulfonylhamstoff-Herbiziden, vorzugsweise, Phenylsulfonylhamstoffen Safenerwirkung entfalten. Geeignete Safener sind aus WO-A-96/14747 und der dort zitierten Literatur bekannt. Folgende Gruppen von Verbindungen sind beispielsweise als Safener für die oben erwähnten herbiziden Wirkstoffe (A) geeignet:

a) Verbindungen vom Typ der Dichlorphenylpyrazolin-3-carbonsäure (S1), vorzugsweise Verbindungen wie 1-(2,4-Dichlorphenyl)-5-(ethoxycarbonyl)-5-methyl-2-pyrazolin-3-carbonsäureethylester (S1-1), und verwandte Verbindungen, wie sie in der WO 91/07874 beschrieben sind,

b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.

c) Verbindungen vom Typ der Triazolcarbonsäuren (S1), vorzugsweise Verbindungen wie Fenchlorazol, d.h. 1-(2,4-Dichlorphenyl)-5-trichlormethyl-(1H)-1,2,4-triazol-3-carbonsäureethylester (S1-6), und verwandte Verbindungen (siehe EP-A-174 562 und EP-A-346 620);

d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) oder -n-propylester (S1-10) oder der 5-(4-Fluorphenyl)-5-phenyl-2-isoxazolin-3-carbonsäureethylester (S1-11), wie sie in der deutschen Patentanmeldung (WO-A-95/07897) beschrieben sind.

e) Verbindungen vom Typ der 8-Chinolinoxyessigsäure (S2), vorzugsweise (5-Chlor-8-chinolinoxy)-essigsäure-(1-methyl-hex-1-yl)-ester (S2-1), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.

f) Verbindungen vom Typ der (5-Chlor-8-chinolinoxy)-malonsäure, vorzugsweise Verbindungen wie (5-Chlor-8-chinolinoxy)-malonsäure-diethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.

g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).

Für Wirkstoffe der Gruppe (B) sind die obengenannten Safener vielfach ebenfalls geeignet. Darüber hinaus eignen sich folgende Safener für die erfindungsgemäßen Herbizid-Kombinationen in Getreidekulturen:

h) Wirkstoffe vom Typ der Pyrimidine, die als bodenwirksame Safener in Reis angewendet werden, wie z.B. "Fenclorim" (PM, S. 512-511) (= 4,6-Dichlor-2-phenylpyrimidin), das als Safener für Pretilachlor in gesätem Reis bekannt ist,
i) Wirkstoffe vom Typ der Pyrimidine, die als bodenwirksame Safener in Reis angewendet werden, wie z.B.
"Fenclorim" (PM, S. 512-511) (= 4,6-Dichlor-2-pyrimidin), das als Safener gegen Schäden von Pretilachlor in gesätem Reis bekannt ist,
j) Wirkstoffe vom Typ der Dichloracetamide, die häufig als Vorauflaufsafener (bodenwirksame Safener) angewendet werden, wie z.B.
"Dichlormid" (PM, S. 363-364) (= N,N-Diallyl-2,2-dichloracetamid),
"R-29148" (= 3-Dichloracetyl-2,2,5-trimethyl-1,3-oxazolidon von der Firma Stauffer),
"Benoxacor" (PM, s. 102-103) (= 4-Dichloracetyl-3,4-dihydro-3-methyl-2H-1,4-benzoxazin).
"PPG-1292" (= N-Allyl-N[(1,3-dioxolan-2-yl)-methyl]dichloracetamid von der Firma PPG Industries),
"DK-24" (= N-Allyl-N-[(allylaminocarbonyl)-methyl]-dichloracetamid von der Firma Sagro-Chem),
"AD-67" oder "MON 4660" (= 3-Dichloracetyl-1-oxa-3-aza-spiro[4,5]decan von der Firma Nitrokemia bzw. Monsanto),
"Diclonon" oder "BAS145138" oder "LAB145138" (= (= 3-Dichloracetyl-2,5,5-trimethyl-1,3-diazabiclyco[4.3.0]nonan von der Firma BASF) und
"Furilazol" oder "MON 13900" (siehe PM, 637-638) (= (RS)-3-Dichloracetyl-5-(2-furyl)-2,2-dimethyloxazolidon)
k) Wirkstoffe vom Typ der Dichloracetonderivate, wie z.B.
"MG 191" (CAS-Reg. Nr. 96420-72-3) (= 2-Dichlormethyl-2-methyl-1,3-dioxolan von der Firma Nitrokemia), das als Safener für Mais bekannt ist,
l) Wirkstoffe vom Typ der Oxyimino-Verbindungen, die als Saatbeizmittel bekannt sind, wie z.B.
"Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist,
"Fluxofenim" (PM, S. 613-614) (= 1-(4-Chlorphenyl)-2,2,2-trifluor-1-ethanon-O-(1,3-dioxolan-2-ylmethyt)-oxim, das als Saatbeiz-Safener gegen Schäden von Metolachlor bekannt ist, und
"Cyometrinil" oder "-CGA-43089" (PM, S. 1304) (= (Z)-Cyanomethoxyimino (phenyl)acetonitril), das als Saatbeiz-Safener gegen Schäden von Metolachlor bekannt ist,
m) Wirkstoffe vom Typ der Thiazolcarbonsäureester, die als Saatbeizmittel bekannt sind, wie z.B.
"Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
n) Wirkstoffe vom Typ der Napthalindicarbonsäurederivate, die als Saatbeizmittel bekannt sind, wie z.B.
"Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
o) Wirkstoffe vom Typ Chromanessigsäurederivatre, wie z.B.
"CL 304415" (CAS-Reg. Nr. 31541-57-8) (= 2-84-Carboxy-chroman-4-yl)-essigsäure von der Firma American Cyanamid), das als Safener für Mais gegen Schäden von Imidazolinonen bekannt ist,
p) Wirkstoffe, die neben einer herbiziden Wirkung gegen Schadpflanzen auch Safenerwirkung an Kulturpflanzen wie Reis aufweisen, wie z.B.
"Dimepiperate" oder "MY-93" (PM, S. 404-405) (= Piperidin-1-thiocarbonsäure-S-1-methyl-1-phenylethylester), das als Safener für Reis gegen Schäden des Herbizids Molinate bekannt ist,
"Daimuron" oder "SK 23" (PM, S. 330) (= 1-(1-Methyl-1-phenylethyl)-3-p-tolylhamstoff), das als Safener für Reis gegen Schäden des Herbizids Imazosulfuron bekannt ist,
"Cumyluron" = "JC-940" (= 3-(2-Chlorphenylmethyl)-1-(1-methyl-1-phenylethyl)-harnstoff, siehe JP-A-60087254), das als Safener für Reis gegen Schäden einiger Herbizide bekannt ist,
"Methoxyphenon" oder "NK 049" (= 3,3'-Dimethyl-4-methoxybenzophenon),das als Safener für Reis gegen Schäden einiger Herbizide bekannt ist,
"CSB" (= 1-Brom-4-(chlormethylsulfonyl)-benzol) (CAS-Reg. Nr. 54091-06-4 von Kumiai), das als Safener gegen Schäden einiger Herbizide in Reis bekannt ist.

Die Wirkstoffe (A) sind, gegebenenfalls in Gegenwart von Safenem, zur Bekämpfung von Schadpflanzen in

einer Reihe von Pflanzenkulturen geeignet, beispielsweise in wirtschaftlich bedeutenden Kulturen wie Getreide (z.B. Weizen, Gerste, Roggen, Hafer, Reis, Mais, Hirse), Zuckerrübe, Zuckerrohr, Raps, Baumwolle und Soja. Von besonderem Interesse ist dabei die Anwendung in Getreide wie Weizen und Mais, insbesondere Mais. Für die Kombinationen (A)+(B) sind diese Kulturen ebenfalls bevorzugt. Für die Kombinationen (A)+(B3) sind vor allem gegenüber den Herbiziden (B3) tolerante Mutantenkulturen oder tolerante transgene Kulturen von besonderem Interesse, vorzugsweise Mais und Soja, insbesondere Mais, der gegenüber Glufosinate oder Glyphosate resistent ist, oder Sojakulturen, die gegen Imidazolinone resistent ist.

Als Kombinationspartner (B) kommen beispielsweise folgende Verbindungen der Untergruppen (B1) bis (B3) in Frage (die Bezeichnung der Herbizide erfolgt weitgehend mit dem "common name", soweit möglich nach der Referenzstelle "The Pesticide Manual" 11th Ed., British Crop Protection Council 1997, abgekürzt "PM"):

(B1) selektiv in Getreide und einigen dikotylen Kulturen gegen monokotyle und dikotyle Schadpflanzen wirksame Herbizide mit Blatt- und Bodenwirkung, beispielsweise

a) in Mais selektive Herbizide, beispielsweise

(B1.1) aus der Gruppe der Acetanilide oder Chloracetanilide wie

(B1.1.1) Alachlor (PM, S. 23-24), 2-Chlor-N-(2,6-diethylphenyl)-N-(methoxymethyl)-acetamid,
(B1.1.2) Metolachlor (PM, S. 833-834), 2-Chlor-N-(2-ethyl-6-methylphenyl)-N-(2-methoxy-1-methylethyl)-acetamid,
(B1.1.3) Acetochlor (PM, S. 10-12), 2-Chlor-N-(ethoxymethyl)-N-(2-ethyl-6-methylphenyl)-acetamid, (B1.1.4) Dimethenamid (PM, S. 409-410), 2-Chlor-N-(2,4-dimethyl-3-thienyl)-N-(2-methoxy-1-methylethyl)-acetamid,
(B1.1.5) Pethoxamid (AG Chem, New Compound Review (publ. Agranova), Vol. 17, 1999, S. 94, d.h. 2-chloro-N-(2-ethoxyethyl)-N-(2-methyl-1-phenyl-1-propenyl)acetamid,

(B1.2) aus der Gruppe der Triazine wie

(B1.2.1) Atrazin (PM, S. 55-57), N-Ethyl-N'-isopropyl-6-chlor-2,4-diamino-1,3,5-triazin,
(B1.2.2) Simazin (PM, S. 1106-1108), 6-Chlor-N,N-diethyl-2,4-diamino-1,3,5-triazin,
(B1.2.3) Cyanazin (PM, S. 280-283), 2-(4-Chlor-6-ethylamino-1,3,5-triazin-2-ylamino)-2-methyl-propionsäurenitril,
(B1.2.4) Terbuthylazin (PM, S. 1168-1170), N-Ethyl-N'-tert.-butyl-6-chlor-2,4-diamino-1,3,5-triazin,
(B1.2.5) Metribuzin (PM, S. 840-841), 4-Amino-6-tert.-butyl-3-methylthio-1,2,4-triazin-5(4H)-on,
(B1.2.6) Isoxaflutole (PM, S. 737-739), (5-Cyclopropyl-4-isoxazolyl)[2-(methylsulfonyl)-4-(trifluormethyl) phenyl]methanon,
(B1.2.7) Fluthiamid (BAY FOE 5043) (PM, S. 82-83), 4'-Fluor-N-isopropyl-2-(5-trifluormethyl-1,3,4-thiadiazol-2-yloxy)-acetanilid,
(B1.2.8) Terbutryn (PM, S. 1170-1172), N-(1,1-dimethylethyl)-N'ethyl-6-(methylthio)-1,3,5-triazin-2,4-diamin,

(B1.3) aus der Gruppe der Sulfonylharnstoffe wie

(B1.3.1) Nicosulfuron (PM, S. 877-879), 2-(4,6-Dimethoxypyrimidin-2-yl)-3-(3-dimethylcarbamoyl-2-pyridylsulfonyl)-harnstoff und dessen Salze,
(B1.3.2) Rimsulfuron (PM, S. 1095-1097), 1-(4,6-Dimethoxypyrimidin-2-yl)-3-(3-ethylsulfonyl-2-pyridylsulfonyl)-hamstoff und dessen Salze,
(B1.3.3) Primisulfuron und Ester wie der Methylester (PM, S. 997-999), 2-[4,6-Bis(difluormethoxy)-pyrimidin-2-ylcarbamoylsulfamoyl]-benzoesäure bzw. -methylester, und deren Salze,

(B1.4) aus der Gruppe mit unterschiedlichen Strukturtypen wie

(B1.4.1) Pendimethalin (PM, S. 937-939), N-(1-ethylpropyl)-2,6-dinitro-3,4-xylidin,
(B1.4.2) Sulcotrione (PM, S. 1124-1125), 2-(2-Chlor-4-mesylbenzoyl)-cyclohexan-1,3-dion,
(B1.4.3) Dicamba (PM, S. 356-357), 3,6-Dichlor-o-anissäure und deren Salze,

(B1.4.4) Mesotrione, 2-(4-Mesyl-2-nitrobenzoyl)cyclohexan-1,3-dion (ZA 1296, vgl. Weed Science Society of America (WSSA) in WSSA Abstracts 1999, Vol. 39, Seite 65-66, Ziffern 130-132),

(B1.4.5) Linuron (PM, S. 751-753), 3-(3,4-dichlorophenyl)-1-methoxy-1-methylharnstoff

(B1.4.6) Isoxachlortole (AG Chem, New Compound Review, publ. Agranova, Vol. 16, 1998, S. 39), d.h. 4-chloro-2-(methylsulfonyl)phenyl-5-cyclopropyl-4-isoxazolylketon

(B1.4.7) Benoxacor (PM, S. 102-103), (±)-4-dichloroacetyl-3,4-dihydro-3-methyl-2H-1,4-benzoxazin

(B1.5) aus der Gruppe der Triazolopyrimidine wie

(B1.5.1) Metosulam (PM, S. 836-838), 2',6'-dichloro-5,7-dimethoxy-3'methyl[1,2,4]triazolo[1,5-a]pyrimidin-2-sulfonamid

(B1.5.2) Flumetsulam (PM, S. 573-574), 2',6'-difluoro-5-methyl[1,2,4]triazolo[1,5-a]pyrimidin-2-sulfonamid

(B1.5.3) Cloransulam und Ester wie der Methylester (PM, S. 265), 3-chloro-2-(5-ethoxy-7-fluoro[1,2,4]triazolo[1,5-c]pyrimidin-2-ylsulfonamido)benzoesäure und vorzugsweise der Methylester,

(B1.5.4) Florasulam (Zeitschrift für Pflanzenkrankheiten und Pflanzenschutz, Verlag Eugen Ulmer, Stuttgart, Sonderheft XVI, 1998, S. 527-534), N-(2,6-difluorophenyl)-8-fluoro-5-methoxy(1,2,4)triazolo [1,5-C]pyrimidin-2-sulfonamid

b) in Reis selektive Herbizide, beispielsweise

(B1.6) aus der Gruppe mit unterschiedlichen Strukturtypen, wie

(B1.6.1) Molinate (PM, S. 847-849), N-(Ethylthio-carbonyl)-azepan,

(B1.6.2) Thiobencarb (PM, S. 1192-1193), N,N-Diethylcarbaminsäure-4-chlorbenzylthioester

(B1.6.3) Quinchlorac (PM, S. 1078-1080), 3,7-Dichlorchinolin-8-carbonsäure und deren Salze

(B1.6.4) Propanil (PM, S. 1017-1019), N-(3,4-dichlorophenyl)-propanamid

(B1.6.5) Pyribenzoxim, Benzophenone O-[2,6-bis-[(4,6-dimethoxy-2-pyrimidnyl)oxy]benzoyl]oxim, Tagungsband: The 1997 Brighton Crop Protection Conference, Weeds (publ. British Crop Protection Council) S. 39-40

(B1.6.6) Butachlor (PM, S. 159-160), N-(Butoxymethyl)-2-chlor-N-(2,6-diethylphenyl)-acetamid

(B1.6.7) Pretilachlor (PM, S. 995-996), N-(2-Propoxyethyl)-2-chlor-N-(2,6-diethylphenyl)acetamid

(B1.6.8) Clomazone (PM, S. 256-257), 2-[(2-Chlorphenyl)-4,4-dimethyl-3-isoxazolidinon;

(B1.6.9) Oxadiargyl (PM, S. 904-905), 5-tert-Butyl-3-[2,4-dichloro-5-(prop-2-ynyloxy)phenyl]-1,3,4-oxadiazol-2(3H)-one,

(B1.6.10) Oxazictomefone, 3-[1-(3,5-dichlorophenyl)1-methylethyl]-2,3-dihydro-6-methyl-5-phenyl-4H-1,3-oxazim-4-one Tagungsband: The 1997 Brighton Crop Protection Conference, Weeds (publ. British Crop Protection Council) S. 73-74

(B1.6.11) Anilofos (PM, S. 47-48), S-4-Chlor-N-isopropylcarbaniloylmethyl-O,O-dimethyl-phosphorodithioat

(B1.6.12) Cafenstrole (PM, S. 173-174), 1-Diethylcarbamoyl-3-(2,4,6-trimethylphenylsulfonyl)-1,2,4-triazol

(B1.6.13) Mefenacet (PM, S. 779-781 ), 2-(1,3-Benzthiazol-3-yloxy)-N-methylacetanilid

(B1.6.14) Fentrazamid, 4-(2-Chlorphenyl)-5-oxo-4,5-dihydro-tetrazole-1-carboxylic acid cyclohexylethylamid Tagungsband: The 1997 Brighton Crop Protection Conference, Weeds (publ. British Crop Protection Council), S. 67-68

(B1.6.15) Thiazopyr (PM, S. 1185-1187), methyl 2-difluoromethyl-5-(4,5-dihydro-1,3-thiazol-2-yl)-4-isobutyl-6-trifluoromethylnicotinat)

(B1.6.16) Tridopyr (PM, S. 1237-1239), [(3,5,6-trichloro-2-pyridinyl)oxy]essigsäure, bevorzugt als Triclopyr, Triclopyr-butotyl, Triclopyr-triethylammonium,

(B1.6.17) Oxadiazone (PM, S. 905-907), 5-tert-butyl-3-(2,4-dichloro-5-isopropoxyphenyl)-1,3,4-oxadiazol-2(3H)-on,

(B1.6.18) Esprocarb (PM, S. 472-473), S-Benzyl-1,2-dimethylpropyl(ethyl)-thiocarbamat

(B1.6.19) Pyributicarb (PM, S. 1060-1061), O-3-tert-Butylphenyl-6-methoxy-2-pyridyl-(methyl)-thiocarbamat (Pyributicarb, TSH-888)

(B1.6.20) Azimsulfuron (PM, S. 63-65), 1-(4,6-dimethoxypyrimidin-2-yl)-3-[1-methyl-4-(2-methy)-2H-tetrazol-5-yl)pyrazol-5-ylsulfonylharnstoff

(B1.6.21) Azole, wie sie aus der EP-A-0663913 bekannt sind, auf die hiermit ausdrücklich Bezug genommen wird, z.B. 1-(3-Chlor-4,5,6,7-tetrahydropyrazolo-[1,5-a]-pyridin-2-yl)-5-methylpropargylamino)-4-pyrazolylcarbonsäurenitril (im weiteren "EP 913"),

(B1.6.22) Thenylchlor (PM, S. 1182-1183), 2-chlor-N-(3-methoxy-2-thenyl)-2',6'-dimethylacetanilide,

(B1.6.23) Pentoxazone (PM, S. 942-943), 3-(4-Chloro-5-cyclopentyloxy-2-fluorphenyl)-5-isopropyliden-1,3-oxazolidin-2,4-dion,

(B1.6.24) Pyriminobac und dessen Ester wie der Methylester (PM, S. 1071-1072), 2-(4,6-Dimethoxy-2-pyrimidinyloxy)-6-(1-methoxyiminoethyl)-benzoesäuremethylester, auch als Säure oder Natriumsalz,

(B1.6.25) OK 9701 (AG Chem, New Compound Review, publ. Agranova, Vol. 17, 1999, S. 75),

(B1.6.26) Quizalofop/Quizalofop-P und deren Ester wie der Ethyl- oder Tefurylester (PM, S. 1087-1092), (RS)-2-[4-(6-chlorochinoxalin-2-yloxy)phenoxy]propionsäure

(B1.6.27) Fenoxaprop/Fenoxaprop-P oder deren Ester wie der Ethylester (PM, S. 519-520), 2-[4-(6-Chlorbenzoxazol-2-yloxy)-phenoxy]propionsäureethylester

(B1.6.28) Fluazifop/Fluazifop-P und deren Ester wie der Butylester (PM, S. 553-557), butyl (RS)-2-[4-(5-trifluoromethyl-2-pyridiyloxy)phenoxy]propionat

(B1.6.29) Hatoxyfop /Heloxyfop-P und deren Ester wie der Methylester (PM, S. 659-663), (±)-2-[4-[[3-Chlor-5-(trifluoromethyl)-2-pyridinyl]oxy]phenoxy]propionsäure, umfassend u.a. die Anwendungsform als Haloxyfop-etotyl, haloxyfop-methyl, haloxyfop-methyl [(R)-Isomer],

(B1.6.30) Propaquizafop (PM, S. 1021-1022), 2-isopropylidenaminooxyethyl (R)-2-[4-(6-chlorochinoxafin-2-yloxy)phenoxy]propionat

(B1.6.31) Clodinafop und deren Ester wie der Propargylester (PM, S. 251-253), (R)-2-[4-(5-chloro-3-fluoro-2-pyridyloxy)phenoxy]propionsäure

(B1.6.32) Cyhalofop und deren Ester wie der Butylester (PM, S. 297-298), Butyl(R)-2-[4-(4-cyano-2-fluorophenoxy)phenoxy]propionat

(B1.6.33) Sethoxydim (PM, S. 1101-1103), (±)-(EZ)-(1-ethoxyiminobutyl)-5-[2-ethylthio)propyl]-3-hydroxycyclohex-2-enone

(B1.6.34) Cycloxydim (PM, S. 290-291 ), (±)-2-[1-(ethoxyimino)buty)]-3-hydroxy-5-thian-3-ylcyclohex-2-enon

(B1.6.35) Clethodim (PM, S. 250-251), (±)-2-[(E)-1-[(E)-3-chloroallyloxyimino]propyl]-5-[2-(ethylthio)propyl]-3-hydrocyclohex-2-enon

(B1.6.36) Clefoxidim, 2-[1-(2-(4-chlorophenoxy)propoxyimino)butyl]-3-oxo-5-thione-3-ylcyctohex-1-enol (AG Chem, New Compound Review (publ. Agranova), Vol. 17, 1999, S. 26)

c) in Weizen, Roggen, Hafter oder Gerste selektive Herbizide, beispielsweise (B1.7) aus der Gruppe mit unterschiedlichen Strukturtypen wie

(B1.7.1) Isoproturon (PM, S. 732-734), 3-(4-isopropylphenyl)-1,1-dimethylharnstoff

(B1.7.2) Chlortuloron (PM, S. 229-231), 3-(3-chloro-p-tolyl)-1,1-dimethylharnstoff

(B1.7.3) Prosulfocarb (PM, S. 1039-1041), S-benzyl dipropylthiocarbamat

(B1.7.4) MON 48500, 5-[4-bromo-1-methyl-5-(trifluoromethyl)-1H-pyrazol-3-yl]-2-chloro-4-fluoro-benzoesäureisopropylester, (Tagungsband: The 1997 Brighton Crop Protection Conference, Weeds (publ. British Crop Protection Council), S. 45-46)

(B1.7.5) Diclofop/Diclofop-P und deren Ester wie der Methylester (PM, S. 374-377), (RS)-2-(2,4-dichlorophenoxy)phenoxy]propionsäure

(B1.7.6) Imazamethabenz (PM, S. 694-696), methyl(±)-6-(4-isopropyl-4-methyl-5-oxo-2-imidazolin-2-yl)-m-toluate und methyl(±)-2-(4-isopropyl-4-methyl-5-oxo-2-imidazolin-2-yl)-p-toluate

(B1.7.7) Triasulfuron und dessen Salze (PM, S. 1222-1224), 1-[2-(2-chloroethoxy)phenylsulfonyl]-3-(4-methoxy-6-methyl-1,3,5-triazin-2-yl)harnstoff

(B1.7.8) Flupyrsulfuron und dessen Ester wie der Methylester und deren Salze (PM, S. 586-588), methyl 2-(4,6-dimethoxypyrimidin-2-ylcarbamoylsulfamoyl)-6-trifluoromethylnicotinat natrium)

(B1.7.9) Sulfonylharnstoffe wie sie aus der US 5,648,315, auf die hiermit ausdrücklich Bezug genommen wird, bekannt sind, z.B. N-[(4,6-dimethoxypyrimidin-2-yl)aminocarbonyl]-5-methylsulfonamidoethyl-2-methoxycarbonylbenzolsulfonamid (im weiteren "US 315")

(B2) selektiv in Getreide und einigen dikotylen Kulturen gegen überwiegend dikotyle Schadpflanzen wirksame Herbizide, beispielsweise

a) in Mais selektive Herbizide, beispielsweise

(B2.1) aus der Gruppe der Wuchsstoffe vom Auxin-typ wie

(B2.1.1) MCPA (PM, S. 767-769), (4-Chlor-2-methyl-phenoxy)-essigsäure und deren Salze und Ester,
(B2.1.2) 2,4-D (PM, S. 323-327), 2,4-Dichlorphenoxyessigsäure und deren Salze und Ester,

(B2.2) aus der Gruppe der Hydroxybenzonitrile (HBN) wie

(B2.2.1) Bromoxynil (PM, S. 149-151), 3,5-Dibrom-4-hydroxy-benzonitril,

(B2.3) aus der Gruppe mit unterschiedlichen Strukturtypen wie

(B2.3.1) Bentazone (PM, S. 1064-1066), 3-Isopropyl-2,2-dioxo-1H-2,1,3-benzothiadiazin-4(3H)-on,
(B2.3.2) Fluthiacet (PM, S. 606-608), [2-Chlor-4-fluor-5-[5,6,7,8-tetrahydro-3-oxo-1H,3H-1,3,4-thiadiazolo [3,4-a]pyridazin-1-ylidenamino)phenylthio]-essigsäure und vorzugsweise der Methylester,
(B2.3.3) Pyridate (PM, S. 1064-1066), Thiokohlensäure-O-(6-Chlor-3-phenyl-pyridazin-4-yl)-S-(octyl)-diester,
(B2.3.4) Diflufenzopyr (BAS 654 00 H, PM S. 81-82), 2-{1-[4-(3,5-difluorophenyl)semicarbazono]ethyl}nicotinsäure
(B2.3.5) Carfentrazone (PM, S. 191-193), ethyl (RS)-2-chloro-3-[2-chloro-5-(4-difluoromethyl-4,5-dihydro-3-methyl-5-oxo-1H-1,2,4-triazol-1-yl)-4-fluorophenyl]propionat angewendet u.a. als Carfentrazone-ethyl (wie angegeben) oder auch als Säure
(B2.3.6) Clopyralid (PM, S. 260-263), 3,6-dichloropyridin-2-carbonsäure

(B2.4) aus der Gruppe der Sulfonylharnstoffe wie

(B2.4.1) Halosulfuron (PM, S. 657-659), 3-Chlor-5-(4,6-dimethoxypyrimidin-2-ylcarbamoylsulfamoyl)-1-methylpyrazol-4-carbonsäure und deren Ester und Salze, vorzugsweise der Methylester,
(B2.4.2) Thifensulfuron und dessen Ester, vorzugsweise der Methylester (PM, S. 1188-1190), 3-[[[[(4-Methoxy-6-methyl-1,3,5-triazin-2-yl)-amino]-carbonyl]-amino]sulfonyl]-2-thiophencarbonsäure bzw. -methylester und dessen Salze,
(B2.4.3) Prosulfuron und dessen Salze (PM, S. 1041-1043), 1-(4-Methoxy-6-methyl-1,3,5-triazin-2-yl)-3-[2-(3,3,3-trifluorpropyl)-phenylsulfonyl]-harnstoff und dessen Salze,
(B2.4.4) Iodosulfuron (proposed common name) und vorzugsweise Ester wie der Methylester und deren Salze (vgl. WO 96/41537 auf die hiermit ausdrücklich Bezug genommen wird), 4-Iod-2-(4-Methoxy-6-methyl-1,3,5-triazin-2-ylcarbamoylsulfamoyl)-benzoesäure bzw. -methylester und deren Salze wie das Natriumsalz, bekannt aus WO-A-92/13845 auf die hiermit ausdrücklich Bezug genommen wird,
(B2.4.5) Tritosulfuron und dessen Salze (AG Chem, New Compound Review (publ. Agranova), Vol. 17, 1999, S. 24), N-[[[4'-methoxy-6-(trifluoromethyl)-1,3,5-triazin-2-yl]amino]carbonyl]-2-trifluoromethylbenzenesulfonamid)
(B2.4.6) Sulfosulfuron und dessen Salze (PM, S. 1130-1131), 1-(4,6-dimethoxypyrimidin-2-yl)-3-(2-ethylsulfonylimidazo[1,2-a]pyridin-3-yl)sulfonylhamstoff

b) in Reis selektive Herbizide, beispielsweise

(B2.5) aus der Gruppe mit unterschiedlichen Strukturtypen, wie

(B2.5.1) 2,4-D (PM, S.323-327), (2,4-Dichlorphenoxy)essigsäure, häufig eingesetzte Formen: 2,4-D-butotyl, 2,4-D-butyl, 2,4-Ddimethylammonium, 2,4-D-diolamin, 2,4-D-iso-octyl, 2,4-Disopropyl, 2,4-D-trolamin
(B2.5.2) MCPA (PM, S. 770-771 ), (4-Chlor-2-methylphenoxy)essigsäure, vorwiegend eingesetzte Formen sind u.a. MCPA-butotyl, MCPA-dimethylammonium, MCPA-isoctyl, MCPA-Kalium, MCPA-Natrium
(B2.5.3) Bensulfuron und dessen Ester, vorzugsweise der Methylester und deren Salze, (PM, S. 104-105), α-(4,6-Dimethoxypyrimidin-2-ylcarbamoyl-sulfamoyl)-O-toluolsäure-methylester
(B2.5.4) Methsulfuron und dessen Ester, vorzugsweise der Methylester und deren Salze (PM, S. 842-844), methyl 2-[[[[(4-methoxy-6-methyl-1,3,5-triazin-2-yl)amino]carbonyl] amino]sulfonyl] benzoat

(B2.5.6) Acifluorfen (PM, S. 12-14), 5-(2-Chlor-α,α,α,-trifluor-p-tolyloxy)-2-nitrobenzoesäure, auch verwendet als Acifluorfen-Natrium

(B2.5.7) Bispyribac (KIH 2023), bevorzugt ist die Form als Natriumsalz (PM, S. 129-131), Natrium 2,6-bis[(4,6-dimethoxypyrimidin-2-yl)oxy]benzoat,

(B2.5.8) Ethoxysulfuron und dessen Ester und Salze (PM,S. 488-490), 1-(4,6-dimethoxypyrimidin-2-yl)-3-(2-ethoxyphenoxysulfonyl)harnstoff

(B2.5.9) Cinosulfuron und dessen Ester und Salze (PM, S. 248-250), 1-(4,6-Dimethoxy-1,3,5-triazin-2-yl)-3-[2-(2-methoxyethoxy)-phenylsulfonyl]-harnstoff

(B2.5.10) Pyrazosulfuron und dessen Ester, vorzugsweise der Ethylester, und deren Salze (PM, S. 1052-1054), 5-(4,6-Dimethoxypyrimidin-2-yl-carbamoylsulfamoyl)-1-methylpyrazol-4-carbonsäuremethylester

(B2.5.11) Imazosulfuron und dessen Ester und Salze (PM, S. 703-704), 1-(2-chloroimidazo[1,2-a]pyridin-3-ylsulfonyl)-3-(4,6-dimethoxypyrimidin-2-yl]hamstoff

(B2.5.12) Cyclosulfamuron und dessen Ester und Salze (PM, S. 288-289), N-[[[2-(cyclopropylcarbonyl) phenyl]amino]sulfonyl]-N1-(4,6-dimethoxypyrimidin-2-yl)harnstoff

(B2.5.13) Chlorsulfuron und dessen Ester und Salze (PM, S. 239-240), 1-(2-chlorophenylsulfonyl)-3-(4-methoxy-6-methyl-1,3,5-triazin-2-yl)hamstoff

(B2.5.14) xBromobutide (PM, S. 144-145), 2-Brom-3,3-dimethyl-N-(1-methyl-1-phenylethyl)-butyramid

(B2.5.15) Bentazon (PM, S. 109-111), 3-Isopropyl-1H-2,1,3-benzothiadiazin-4(3H)-on-2,2-dioxid

(B2.5.16) Benfuresate (PM, S. 98-99), 2,3-Dihydro-3,3-dimethylbenzofuran-5-yl-ethansulfonat

(B.2.5.17) Chlorimuron und dessen Ester, vorzugsweise der Ethylester, und deren Salze (PM, S. 217-218), ethyl 2-(4-chloro-6-methoxypyrimidin-2-yl-carbonylsulfamoyl)benzoat

c) in Weizen, Roggen, Hafer oder Gerste selektive Herbizide, beispielsweise

(B2.6) aus der Gruppe mit unterschiedlichen Strukturtypen wie

(B2.6.1) Diflufenican (PM, S. 397-399), 2',4'-difluoro-2-(α,α,α-trifluoro-m-tolyloxy)nicotinanilid

(B2.6.2) x Flurtamone (PM, S. 602-603), (RS)-5-methylamino-2-phenyl-4-(α,α,α-trifluoro-m-tolyl)furan-3 (2H)on

(B2.6.3) Tribenuron (PM, S. 1230-1232), methyl 2-[[[[4-methoxy-6-methyl-1,3,5-triazin-2-yl)-methylamino]carbonyl]amino]sulfonyl]benzoat

(B.2.6.4) Amidosulfuron und dessen Salze (PM, S. 37-38), 1-(4,6-dimethoxypyrimidin-2-yl)-3-mesyl(methyl)sulfamoylharnstoff

(B2.6.5) Mecoprop/Mecoprop-p und deren Ester (PM, S. 776-779), (RS)-2-(4-chloro-o-tolyloxy)propionsäure

(B2.6.6) Dichlorprop/Dichlorprop-P und deren Ester (PM, S. 368-372), (RS)-2-(2,4-dichlorophenoxy)propionsäure

(B2.6.7) Fluroxypyr (PM, S. 597-600), 4-amino-3,5-dichloro-6-fluoro-2-pyridyloxyacetic acid

(82.6.8) Picloram (PM, S. 977-979), 4-amino-3,5,6-trichloropyridine-2-carbonsäure

(B2.6.9) loxynil (PM, S. 718-721), 4-hydroxy-3,5-di-iodobenzonitril

(B2.6.10) Bifenox (PM, S. 116-117), methyl-5-(2,4-dichlorophenoxy)-2-nitrobenzoat

(B2.6.11) Pyraflufen-ethyl (PM, S. 1048-1049), ethyl 2-chloro-5-(4-chloro-5-difluoromethoxy-1-methylpyrazol-3-yl)-4-fluorophenoxyacetat

(B.2.6.12) Fluoroglycofen-ethyl (PM, S. 580-582), O-[5-(2-chloro-α,α,α-trifluoro-p-tolyloxy)-2-nitrobenzoyl] glycolsäure

(B2.6.13) Cinidon-ethyl (BAS 615005) (AG Chem, New Compound Review, publ. Agranova, Vol. 17, 1999, S. 26)

(B2.6.14) Picolinofen (AG Chem, New Compound Review, (publ. Agranova), Vol. 17, 1999, S. 35), N-4-fluorophenyl-6-(3-trifluoromethylphenoxy)pyridin-2-carboxamid

(B3) gegen monokotyle und dikotyle Schadpflanzen wirksame Herbizide für den

Einsatz im nichtselektiven Bereich oder in spezifisch toleranten Kulturen wie (B3.1) Glufosinate (PM, S. 643-645),

D,L-2-Amino-4-[hydroxy(methyl)phosphinyl]-butansäure und dessen Salze und Ester, beispielsweise

(B3.1.1) Glufosinate-ammonium, das Monoammoniumsalz der Säureform,

(B3.2) Glyphosate (PM, S. 646-649),

N-(Phosphonomethyl)-glycin und dessen Salze und Ester, beispielsweise
(B3.2.1) Glyphosate-isopropylammonium.

(B3.3) Imidazolinone und deren Salze wie

(B3.3.1) Imazapyr und dessen Salze und Ester (PM, S. 697-699),
(B3.3.2) Imazethapyr und dessen Salze und Ester (PM,S. 701-703), (B3.3.3) Imazamethabenz und dessen Salze und Ester (PM, S.694-696),
(B3.3.4) Imazamethabenz-methyl (PM, S.694-696),
(B3.3.5) Imazamox und dessen Salze und Ester (PM, S.696-697)
(B3.3.6) Imazaquin und dessen Salze und Ester, z. B. das Ammoniumsalz (PM, S.699-701) und
(B3.3.7) Imazapic (AC 263,222) und dessen Salze und Ester, z.B. das Ammoniumsalz, (PM, S.5 und 6, referiert unter AC 263,222).

Wenn die Kurzform des "common name" verwendet wird, so sind damit alle gängigen Derivate, wie die Ester und Salze, und Isomere, insbesondere optische Isomere umfaßt, insbesondere die handelsüblichen Form bzw. Formen. Die angegebenen chemischen Verbindungsnamen bezeichnen zumindest eine der von dem "common name" umfaßten Verbindungen, häufig eine bevorzugte Verbindung. Bei Sulfonylhamstoffen sind mit Salzen auch die umfaßt, die durch Austausch eines Wasserstoffatoms an der Sulfonamidgruppe durch ein Kation entstehen.
Bevorzugt sind Herbizid-Kombinationen aus ein oder mehreren Verbindungen (A) mit einer oder mehreren Verbindungen der Gruppe (B1) oder (B2) oder (B3). Weiter bevorzugt sind Kombinationen von Verbindungen (A) mit einer oder mehreren Verbindungen (B) nach dem Schema:
(A) + (B1) + (B2), (A) + (B1) + (B3), (A) + (B2) + (B3) oder (A) + (B1) + (B2) +(B3)
Dabei sind auch solche Kombinationen erfindungsgemäß, denen noch ein oder mehrere weitere Wirkstoffe anderer Struktur [Wirkstoffe (C)] zugesetzt werden wie
(A) + (B1) + (C), (A) + (B2) + (C) oder (A) + (B3) + (C),
(A) + (B1) + (B2) + (C), (A) + (B1) + (B3) + (C), (A) + (B2) + (B3) + (C) oder
(A) + (B1) + (B2) +(B3) + (C).
Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.
Die Aufwandmengen der Herbizide (B) können von Herbizid zu Herbizid stark variieren. Als Richtgröße für bevorzugte Aufwandmengen für einige Mischungspartner aus der Gruppe (B) können folgende Angaben
[in g AS (Aktivsubstanz)/ha (Hektar)] gelten, wobei in den erfindungsgemäßen Kombinationen auch Mengen unterhalb der niedrigsten Menge sinnvoll sein können:

Zu Verbindungen (B1.1.1), (B1.1.2), (B1.1.3), (B1.1.4.), (B1.2.1), (B1.2.2), (B1.2.3), (B1.2.4.), (B1.2.5):
100-4000, bevorzugt 500-4000 g AS/ha im Vor- und Nachauflaufverfahren gegen Unkräuter und vornehmlich Ungräser,
Zu Verbindungen (B1.2.6):
10-200, bevorzugt 75-150, g AS/ha im Vor- und Nachauflaufverfahren gegen Unkräuter und Ungräser,
Zu Verbindungen (B1.2.7):
10 (insb. 100)-1500, bevorzugt 100-600, g AS/ha im Vor- und Nachauflaufverfahren gegen Unkräuter und Ungräser,
Zu Verbindungen (B1.3):
1-60, bevorzugt 5-60 g AS/ha im Vor- und Nachauflaufverfahren gegen Unkräuter und Ungräser; meist Blattwirkung, teilweise Bodenwirkung,
Zu Verbindungen (B1.4):
(10 insb. 25)-2500, bevorzugt 50-2500, g AS/ha gegen Unkräuter und Ungräser im Nachauflauf-, aber auch Vorauflaufverfahren,
Zu Verbindungen (B2.1):
10 (insb. 100)-3000 g AS/ha vorwiegend gegen Unkräuter und Cyperaceen im Nachauflaufverfahren,
Zu Verbindungen (B2.2):

10 (insb. 50)-1000 g AS/ha vorwiegend gegen Unkräuter im Nachauflaufverfahren,
Zu Verbindungen (B2.3.1):
50 (insb. 500)-2500 g AS/ha vorwiegend gegen Unkräuter im Nachauflaufverfahren,
Zu Verbindungen (B2.3.2):
50 (insb. 300)-1500 g AS/ha vorwiegend gegen Unkräuter im Nachauflaufverfahren,
Zu Verbindungen (B2.3.3):
100 (insb. 150)-1500 g AS/ha vorwiegend gegen Unkräuter im Nachauflaufverfahren,
Zu Verbindungen (B2.4):
0,5-180, bevorzugt 5-80, g AS/ha vorwiegend gegen Unkräuter im Nachauflaufverfahren,
Zu Verbindungen (B3.1) und (B3.2):
: 20 (insb. 100)-2000 g AS/ha in Plantagenkulturen und im Nichtkulturland zur Bekämpfung von Ungräsem und Unkräutern im Nachauflaufverfahren; außerdem in toleranten, transgenen Kulturen zur Bekämpfung von Ungräsem und Unkräutern im Nachauflaufverfahren;
Zu Verbindungen (B3.3):
10-500, bevorzugt 100-200, g AS/ha in Plantagenkulturen und im Nichtkulturland zur Bekämpfung von Ungräsem und Unkräutern im Vor- und Nachauflaufverfahren; außerdem in toleranten, mutanten/transgenen Kulturen zur Bekämpfung von Ungräsem und Unkräutern im Vor- und Nachauflaufverfahren.

Bereiche für geeignete Mengenverhältnisse der Verbindungen (A) und (B) ergeben sich aus den genannten Aufwandmengen für die Einzelstoffe. In den erfindungsgemäßen Kombinationen können die Aufwandmengen in der Regel reduziert werden.
Bevorzugte Mengenbereiche (in g AS/ha) / Mischungsverhältnisse (A):(B), bevorzugt (A1):(B), für die erfindungsgemäßen Kombinationen sind im folgenden aufgeführt:

(A) + (B1.1.1), (B1.1.2), (B1.1.3), (B1.1.4.), (B1.1.5), (B1.2.1), (B1.2.2), (B1.2.3), (B1.2.4.) oder (B1.2.5): 10-100 + 100-3000 / 1:1 bis 1:300, bevorzugt 1:20 bis 1:80,
(A) + (B1.2.6): 10-100 + 10-200 (insb. 10-100) / 10:1 bis 1:20 (insb. 1:10), bevorzugt 5:1 bis 1:5,
(A) + (B1.2.7): 10-100 + 10-1500 (insb. 10-400) / 10:1 bis 1:150 (insb. 1:40), bevorzugt 5:1 bis 1:40 (insb. 1:20),
(A) + (B1.2.8) 10-100 + 250-3000 (insb. 500-2000) / 1:300 bis 1:3, bevorzugt 1:100 bis 1:7
(A) + (B1.3): 10-100 + 1-60 (insb. 1-50) / 100:1 bis 1:6 (insb. 1:5), bevorzugt 50:1 bis 1:2,
(A) + (B1.4): 10-100 + 10-2500 (insb. 10-1000) / 10:1 bis 1:250 (insb. 1:10), bevorzugt 1:1 bis 1:75 (insb. 1:5),
(A) + (B1.5.1), (B1.5.2) oder (B1.5.3): 10-100 + 5-200 (insb. 10-150) / 1:20 bis 20:1, bevorzugt 1:8 bis 6:1
(A) + (B1.5.4): 10-100 + 1-15 (insb. 3-12) / 1:3 bis 90:1, bevorzugt 1:1 bis 20:1
(A) + (B1.6.1) - (B1.6.25): 10-100 + 0,5 - 5000 (insb. 1-4000) / 200:1 bis 1:500, bevorzugt 120:1 bis 1:200
(A) + (B1.6.26) - (B1.6.32): 10-100 + 5-500 (insb. 10-400) / 20:1 bis 1:50, bevorzugt 6:1 bis 1:20
(A) + (B1.6.33) - (B1.6.36): 10-100 + 10-1000 (insb. 25-800) / 10:1 bis 1:100, bevorzugt 2,5:1 bis 1:40
(A) + (B1.7.1) - (B1.7.6): 10-100 + 5-5000 (insb. 10-4000) / 20:1 bis 1:500, bevorzugt 6:1 bis 1:200
(A) + (B1.7.7), (B1.7.8) oder (B1.7.9): 10-100 + 1-80 (insb. 2-60) / 100:1 bis 1:8, bevorzugt 30:1 bis 1:3
(A) +(B2.1): 10-100 + 10-3000 (insb. 10-2500) /10:1 (insb. 1:1) bis 1:300 (insb. 1:250), bevorzugt 3:1 bis 1:100
(A) +(82.2): 10-100 + 10-1000 (insb. 10-800) / 10:1 (insb. 2:1) bis 1:80 (insb. 1:10)
(A) +(B2.3.1): 10-100 + 50-2500 (insb. 50-2000) / 2:1 (insb. 1:5) bis 1:250 (insb. 1:200), bevorzugt 1:1 (insb.1:13) bis 1:100 (insb. 1:33),
(A) +(B2.3.2): 10-100 + 50-1000 / 2:1 bis 1:100, bevorzugt 1:1 bis 1:50,
(A) +(B2.3.3): 10-100 + 100 (insb. 150)-1500, (insb. 300-1200) / 1:1 bis 1:150, bevorzugt insb.1:3 bis 1:60,
(A) + (B.2.3.4) 10-100 + 20-300 (insb. 40-200) / 1:60 bis 5:1, bevorzugt 1:20-1,5:1
(A) + (B2.3.5) 10-100 + 5 - 120 (insb. 10-90) / 20:1 bis 1:12, bevorzugt 6:1 bis 1:4
(A) + (B2.3.6) 10-100 + 25-500 (insb. 50-300) / 4:1 bis 1:50, bevorzugt 2:1 bis 1:30,
(A) +(B2.4): 10-100 + 0,5-180 (insb. 1-80) / 200:1 (insb. 100:1) bis 1:18 (insb. 1:8), bevorzugt 60:1 (insb. 50:1) bis 1:7 (insb. 1:5),
(A) + (B2.5): 10-100 + 0,5-2000 (insb. 1-1500) / 200:1 bis 1:200, bevorzugt 60:1 bis 1:75
(A) + (B2.6.1) oder (B2.6.2): 10-100 + 2,5-400 (insb. 5-200) / 40:1 bis 1:40, bevorzugt 12:1 bis 1:10
(A) + (B2.6.3) oder (B2.6.4): 10-100 + 2,5-80 (insb. 5-60) / 40:1 bis 1:8, bevorzugt 12:1 bis 1:3
(A) + (B2.6.5)-(B2.6.8): 10-100 + 50-2000 (insb. 60-1800) / 2:1 bis 1:200, bevorzugt 1:2 bis 1:90
(A) + (B2.6.9) oder (B2.6.10): 10-100 + 50-3000 (insb. 80-2000) / 2:1 bis 1:300, bevorzugt 1:4 bis 1:100
(A) + (B2.6.11), (B2.6.12) oder (B2.6.13): 10-100 + 15-180 (insb. 2,5-150) / 60:1 bis 1:18, bevorzugt 30:1 bis 1:7
(A) + (B6.1.14): 10-100 + 2,5-80 (insb. 5-60) / 40:1 bis 1:8, bevorzugt 12:1 bis 1:3
(A) +(B3.1): 10-100 + 100-2000, (insb. 20-1600) / 5:1 (insb. 1:1) bis 1:200 (insb. 1:160), bevorzugt 3:1 (insb. 1:3) bis 1:90 (insb. 1:80),

(A) +(B3.2): 10-100 + 20-2000 (insb. 20-1600) / 5:1 (insb. 1:1) bis 1:200 (insb. 1:160), bevorzugt 3:1 (insb. 1:3) bis 1:90 (insb. 1:80),
(A) +(B3.3): 10-100 + 10-500 (insb. 20-150) /20:1 (insb. 5:1) bis 1:50 (insb. 1:20), bevorzugt 4:1 (insb. 3:1) bis 1:10,

Von besonderem Interesse ist die Anwendung von herbiziden Mitteln mit einem Gehalt an folgenden Verbindungen (A) + (B):

(A1.1) + (B1.1.1), (A1.1) + (B1.1.2.), (A1.1) + (B1.1.3), (A1.1) + (B1.1.4), (A1.1) + (B1.1.5), (A1.1) + (B1.2.1), (A1.1) + (B1.2.2.), (A1.1) + (B1.2.3), (A1.1) + (B1.2.4), (A1.1) + (B1.2.5), (A1.1) + (B1.2.6), (A1.1) + (B1.2.7), (A1.1) + (B1.2.8), (A1.1) + (B1.3.1), (A1.1) + (B1.3.2.), (A1.1) + (B1.3.3), (A1.1) + (B1.4.1), (A1.1) + (B1.4.2.), (A1.1) + (B1.4.3), (A1.1) + (B1.4.4), (A1.1) + (B1.4.5), (A.1.1) + (B1.4.6), (A1.1) + (B1.4.7), (A1.1) + (B1.5.1), (A1.1)+ (B1.5.2), (A1.1) + (B1.5.3), (A1.1) + (B1.5.4), (A1.1) + (B1.6.1), (A1.1) + (B1.6.2), (A1.1) + (B1.6.3), (A1.1) + (B1.6.4), (A1.1) + (B1.6.5), (A1.1) + (B1.6.6), (A.1.1) + (B1.6.7), (A1.1) + (B1.6.8), (A1.1) + (B1.6.9), (A1.1) + (B1.6.10), (A1.1) + (B1.6.11), (A1.1) + (B1.6.12), (A1.1) + (B1.6.13), (A1.1) + (B1.6.14), (A1.1) + (B1.6.15), (A1.1) + (B1.6.16), (A1.1) + (B1.6.17), (A1.1) + (B1.6.18), (A.1.1) + (B1.6.19), (A1.1) + (B1.6.20), (A1.1) + (B1.6.21), (A1.1) + (B1.6.22), (A1.1) + (B1.6.23), (A.1.1) + (B1.6.24), (A1.1) + (B1.6.25), (A1.1) + (B1.6.26), (A1.1) + (B1.6.27), (A1.1) + (B1.6.28), (A1.1) + (B1.6.29), (A1.1) + (B1.6.30), (A1.1) + (B1.6.31), (A1.1) + (B1.6.32), (A1.1) + (B1.6.33), (A1.1) + (B1.6.34), (A.1.1) + (B1.6.35), (A1.1) + (B1.6.36), (A1.1) + (B1.7.1). (A1.1) + (B1.7.2), (A1.1) + (B1.7.3), (A1.1) + (B1.7.4), (A1.1) + (B1.7.5), (A1.1) + (B1.7.6), (A1.1) + (B1.7.7), (A1.1) + (B1.7.8), (A1.1) + (B1.7.9), (A1.1) + (B2.1.1), (A1.1) + (B2.1.2.), (A1.1) + (B2.2.1), (A1.1) + (B2.3.1), (A1.1) + (B2.3.2), (A1.1) + (B2.3.3), (A1.1) + (B2.3.4), (A1.1) + (B2.3.5), (A1.1) + (B2.3.6), (A1.1) + (B2.4.1), (A1.1) + (B2.4.2.), (A1.1) + (B2.4.3), (A1.1) + (B2.4.4), (A1.1) + (B2.4.5), (A1.1) + (B2.4.6), (A1.1) + (B2.5.1), (A1.1) + (B2.5.2), (A1.1) + (B2.5.3), (A1.1) + (B2.5.4), (A1.1) + (B2.5.5), (A1.1) + (B2.5.6), (A1.1) + (B2.5.7), (A1.1) + (B2.5.8), (A1.1) + (B2.5.9), (A1.1) + (B2.5.10), (A1.1) + (B2.5.11), (A1.1) + (B2.5.12), (A.1.1) + (B2.5.13), (A1.1) + (B2.5.14), (A1.1) + (B2.5.16), (A1.1) + (B2.5.17), (A1.1) + (B2.6.1), (A1.1) + (B2.6.2), (A1.1) + (82.6.3), (A1.1) + (82.6.4), (A.1.1) + (B2.6.5), (A1.1) + (B2.6.6), (A1.1) + (B2.6.7), (A1.1) + (B2.6.8), (A1.1) + (B2.6.9), (A1.1) + (B2.6.10), (A1.1) + (B2.6.11), (A1.1) + (B2.6.12), (A1.1) + (B2.6.13), (A1.1) + (B2.6.14), (A1.1) + (B3.1.1), (A1.1) + (B3.2.1), (A1.1) + (B3.3.1), (A1.1) + (B3.3.2), (A1.1) + (B3.3.3), (A1.1) + (83.3.4), (A1.1) + (B3.3.5), (A1.1) + (B3.3.6) und (A1.1) + (B3.3.7), (A1.2) + (B1.1.1), (A1.2) + (B1.1.2.), (A1.2) + (B1.1.3), (A1.2) + (B1.1.4), (A1.2) + (B1.1.5), (A1.2) + (B1.2.1), (A1.2) + (B1.2.2.), (A1.2) + (B1.2.3), (A1.2) + (B1.2.4), (A1.2) + (B1.2.5), (A1.2) + (B1.2.6), (A1.2) + (B1.2.7), (A1.2) + (B1.2.8), (A1.2) + (B1.3.1), (A1.2) + (B1.3.2.), (A1.2) + (B1.3.3), (A1.2) + (B1.4.1), (A1.2) + (B1.4.2.), (A1.2) + (B1.4.3), (A1.2) + (B1.4.4), (A1.2) + (B1.4.5), (A.1.2) + (B1.4.6), (A1.2) + (B1.4.7), (A1.2) + (B1.5.1), (A1.2)+ (B1.5.2), (A1.2) + (B1.5.3), (A1.2) + (B1.5.4), (A1.2) + (B1.6.1), (A1.2) + (B1.6.2), (A1.2) + (B1.6.3), (A1.2) + (B1.6.4), (A1.2) + (B1.6.5), (A1.2) + (B1.6.6), (A.1.2) + (B1.6.7), (A1.2) + (B1.6.8), (A1.2) + (B1.6.9), (A1.2) + (B1.6.10), (A1.2) + (B1.6.11), (A1.2) + (B1.6.12), (A1.2) + (B1.6.13), (A1.2) + (B1.6.14), (A1.2) + (B1.6.15), (A1.2) + (B1.6.16), (A1.2) + (B1.6.17), (A1.2) + (B1.6.18), (A.1.2) + (B1.6.19), (A1.2) + (B1.6.20), (A1.2) + (B1.6.21), (A1.2) + (B1.6.22), (A1.2) + (B1.6.23), (A.1.2) + (B1.6.24), (A1.2) + (B1.6.25), (A1.2) + (B1.6.26), (A1.2) + (B1.6.27), (A1.2) + (B1.6.28), (A1.2) + (B1.6.29), (A1.2) + (B1.6.30), (A1.2) + (B1.6.31), (A1.2) + (B1.6.32), (A1.2) + (B1.6.33), (A1.2) + (B1.6.34), (A.1.2) + (B1.6.35), (A1.2) + (B1.6.36), (A1.2) + (B1.7.1), (A1.2) + (B1.7.2), (A1.2) + (B1.7.3), (A1.2) + (B1.7.4), (A1.2) + (B1.7.5), (A1.2) + (B1.7.6), (A1.2) + (B1.7.7), (A1.2) + (B1.7.8), (A1.2) + (B1.7.9), (A1.2) + (B2.1.1), (A1.2) + (B2.1.2.), (A1.2) + (B2.2.1), (A1.2) + (B2.3.1), (A1.2) + (B2.3.2), (A1.2) + (B2.3.3), (A1.2) + (B2.3.4), (A1.2) + (B2.3.5), (A1.2) + (B2.3.6), (A1.2) + (B2.4.1), (A1.2) + (B2.4.2.), (A1.2) + (B2.4.3), (A1.2) + (B2.4.4), (A1.2) + (B2.4.5), (A1.2) + (82.4.6), (A1.2) + (B2.5.1), (A1.2) + (B2.5.2), (A1.2) + (82.5.3), (A1.2) + (B2.5.4), (A1.2) + (B2.5.5), (A1.2) + (B2.5.6), (A1.2) + (82.5.7), (A1.2) + (82.5.8), (A1.2) + (B2.5.9), (A1.2) + (B2.5.10), (A1.2) + (B2.5.11), (A1.2) + (82.5.12), (A1.2) + (B2.5.13), (A1.2) + (B2.5.14), (A1.2) + (B2.5.16), (A1.2) + (B2.5.17), (A1.2) + (B2.6.1), (A1.2) + (B2.6.2), (A1.2) + (B2.6.3), (A1.2) + (B2.6.4), (A1.2) + (B2.6.5), (A1.2) + (B2.6.6), (A1.2) + (B2.6.7), (A1.2) + (82.6.8), (A1.2) + (B2.6.9), (A1.2) + (B2.6.1 0), (A1.2) + (B2.6.11), (A1.2) + (B2.6.12), (A1.2) + (B2.6.13), (A1.2) + (B2.6.14), (A1.2) + (B3.1.1), (A1.2) + (B3.2.1), (A1.2) + (B3.3.1), (A1.2) + (B3.3.2), (A1.2) + (B3.3.3), (A1.2) + (83.3.4), (A1.2) + (B3.3.5), (A1.2) + (83.3.6) und (A1.2) + (B3.3.7), (A1.5) + (B1.1.1), (A1.5) + (B1.1.2), (A1.5) + (B1.1.3), (A1.5) + (B1.1.4), (A1.5) + (B1.1.5), (A1.5) + (B1.2.1), (A1.5) + (B1.2.2.), (A1.5) + (B1.2.3), (A1.5) + (B1.2.4), (A1.5) + (B1.2.5), (A1.5) + (B1.2.6), (A1.5) + (B1.2.7), (A1.5) + (B1.2.8), (A1.5) + (B1.3.1), (A1.5) + (B1.3.2.), (A1.5) + (B1.3.3), (A1.5) + (B1.4.1), (A1.5) + (B1.4.2.), (A1.5) + (B1.4.3), (A1.5) + (B1.4.4), (A1.5) + (B1.4.5), (A.1.5) + (B1.4.6), (A1.5) + (B1.4.7), (A1.5) + (B1.5.1), (A1.5)+ (B1.5.2), (A1.5) + (B1.5.3), (A1.5) + (B1.5.4), (A1.5) + (B1.6.1), (A1.5) + (B1.6.2), (A1.5) + (B1.6.3), (A1.5) + (B1.6.4), (A1.5) + (B1.6.5), (A1.5) + (B1.6.6), (A.1.5) + (B1.6.7), (A1.5) + (B1.6.8), (A1.5) + (B1.6.9), (A1.5) + (B1.6.10), (A1.5) + (B1.6.11), (A1.5) + (B1.6.12), (A1.5) + (B1.6.13), (A1.5) + (B1.6.14), (A1.5) + (81.6.15), (A1.5) + (B1.6.16), (A1.5) + (B1.6.17), (A1.5) + (B1.6.18), (A1.5) + (81.6.19), (A1.5) + (B1.6.20), (A1.5) + (B1.6.21), (A1.5) + (B1.6.22), (A1.5) + (B1.6.23), (A1.5) + (B1.6.24), (A1.5) + (B1.6.25), (A1.5) + (B1.6.26), (A1.5) + (B1.6.27), (A1.5) + (B1.6.28), (A1.5)

+ (B1.6.29), (A1.5) + (B1.6.30), (A1.5) + (B1.6.31), (A1.5) + (B1.6.32), (A1.5) + (B1.6.33), (A1.5) + (B1.6.34), (A. 1.5) + (B1.6.35), (A1.5) + (B1.6.36), (A1.5) + (B1.7.1), (A1.5) + (B1.7.2), (A1.5) + (B1.7.3), (A1.5) + (B1.7.4), (A1.5) + (B1.7.5), (A1.5) + (B1.7.6), (A1.5) + (B1.7.7), (A1.5) + (B1.7.8), (A1.5) + (B1.7.9), (A1.5) + (B2.1.1), (A1.5) + (B2.1.2.), (A1.5) + (B2.2.1), (A1.5) + (82.3.1), (A1.5) + (B2.3.2), (A1.5) + (B2.3.3), (A1.5) + (B2.3.4), (A1.5) + (B2.3.5), (A1.5) + (B2.3.6), (A1.5) + (B2.4.1), (A1.5) + (B2.4.2.), (A1.5) + (82.4.3), (A1.5) + (B2.4.4), (A1.5) + (B2.4.5), (A1.5) + (B2.4.6), (A1.5) + (B2.5.1), (A1.5) + (B2.5.2), (A1.5) + (B2.5.3), (A1.5) + (B2.5.4), (A1.5) + (B2.5.5), (A1.5) + (B2.5.6), (A1.5) + (B2.5.7), (A1.5) + (B2.5.8), (A1.5) + (82.5.9), (A1.5) + (B2.5.10), (A1.5) + (B2.5.11), (A1.5) + (B2.5.12), (A1.5) + (B2.5.13), (A1.5) + (B2.5.14), (A1.5) + (B2.5.16), (A1.5) + (B2.5.17), (A1.5) + (B2.6.1), (A1.5) + (B2.6.2), (A1.5) + (B2.6.3), (A1.5) + (B2.6.4), (A1.5) + (B2.6.5), (A1.5) + (B2.6.6), (A1.5) + (82.6.7), (A1.5) + (B2.6.8), (A1.5) + (B2.6.9), (A1.5) + (B2.6.10), (A1.5) + (B2.6.11), (A1.5) + (B2.6.12), (A1.5) + (B2.6.13), (A1.5) + (B2.6.14), (A1.5) + (B3.1.1), (A1.5) + (B3.2.1), (A1.5) + (B3.3.1), (A1.5) + (B3.3.2), (A1.5) + (B3.3.3), (A1.5) + (B3.3.4), (A1.5) + (83.3.5), (A1.5) + (B3.3.6) und (A1.5) + (B3.3.7), (A2.1) + (B1.1.1), (A2.1) + (B1.1.2.), (A2.1) + (B1.1.3), (A2.1) + (B1.1.4), (A2.1) + (B1.1.5), (A2.1) + (B1.2.1), (A2.1) + (B1.2.2), (A2.1) + (B1.2.3), (A2.1) + (B1.2.4), (A2.1) + (B1.2.5), (A2.1) + (B1.2.6), (A2.1) + (B1.2.7), (A2.1) + (B1.2.8), (A2.1) + (B1.3.1), (A2.1) + (B1.3.2), (A2.1) + (B1.3.3), (A2.1) + (B1.4.1), (A2.1) + (B1.4.2), (A2.1) + (B1.4.3), (A2.1) + (B1.4.4), (A2.1) + (B1.4.5), (A2.1) + (B1.4.6), (A2.1) + (B1.4.7), (A2.1) + (B1.5.1), (A2.1)+ (B1.5.2), (A2.1) + (B1.5.3), (A2.1) + (B1.5.4), (A2.1) + (B1.6.1), (A2.1) + (B1.6.2), (A2.1) + (B1.6.3), (A2.1) + (B1.6.4), (A2.1) + (B1.6.5), (A2.1) + (B1.6.6), (A2.1) + (B1.6.7), (A2.1) + (B1.6.8), (A2.1) + (B1.6.9), (A2.1) + (B1.6.10), (A2.1) + (B1.6.11), (A2.1) + (B1.6.12), (A2.1 + (B1.6.13), (A2.1) + (B1.6.14), (A2.1) + (B1.6.15), (A2.1) + (B1.6.16), (A2.1) + (B1.6.17), (A2.1 + (B1.6.18), (A2.1) + (B1.6.19), (A2.1) + (B1.6.20), (A2.1) + (B1.6.21), (A2.1) + (B1.6.22), (A2.1) + (B1.6.23), (A2.1) + (B1.6.24), (A2.1) + (B1.6.25), (A2.1) + (B1.6.26). (A2.1) + (B1.6.27), (A2.1) + (B1.6.28), (A2.1) + (B1.6.29), (A2.1) + (B1.6.30), (A2.1) + (B1.6.31), (A2.1) + (B1.6.32), (A2.1) + (B1.6.33), (A2.1) + (B1.6.34), (A2.1) + (B1.6.35), (A2.1) + (B1.6.36), (A2.1) + (B1.7.1), (A2.1) + (B1.7.2), (A2.1) + (B1.7.3), (A2.1) + (B1.7.4), (A2.1) + (B1.7.5), (A2.1) + (B1.7.6), (A2.1) + (B1.7.7), (A2.1) + (B1.7.8), (A2.1) + (B1.7.9), (A2.1) + (B2.1.1), (A2.1) + (B2.1.2.), (A2.1) + (B2.2.1), (A2.1) + (B2.3.1), (A2.1) + (B2.3.2), (A2.1) + (B2.3.3), (A2.1) + (B2.3.4), (A2.1) + (B2.3.5), (A2.1) + (B2.3.6), (A2.1) + (B2.4.1), (A2.1) + (B2.4.2.), (A2.1) + (B2.4.3), (A2.1) + (B2.4.4), (A2.1) + (B2.4.5), (A2.1) + (B2.4.6), (A2.1) + (B2.5.1), (A2.1) + (B2.5.2), (A2.1) + (B2.5.3), (A2.1) + (B2.5.4), (A2.1) + (B2.5.5), (A2.1) + (B2.5.6), (A2.1) + (B2.5.7), (A2.1) + (B2.5.8), (A2.1) + (B2.5.9), (A2.1) + (B2.5.10), (A2.1) + (B2.5.11), (A2.1) + (B2.5.12), (A2.1) + (B2.5.13), (A2.1) + (B2.5.14), (A2.1) + (B2.5.16), (A2.1) + (B2.5.17), (A2.1) + (B2.6.1), (A2.1) + (B2.6.2), (A1.5) + (B2.6.3), (A2.1) + (B2.6.4), (A2.1) + (B2.6.5), (A2.1) + (B2.6.6), (A2.1) + (B2.6.7), (A2.1) + (B2.6.8), (A2.1) + (B2.6.9), (A2.1) + (B2.6.1 0), (A2.1) + (B2.6.11), (A2.1) + (B2.6.12), (A2.1) + (B2.6.13), (A2.1) + (B2.6.14), (A2.1) + (B3.1.1), (A2.1) + (B3.2.1), (A2.1) + (B3.3.1), (A2.1) + (B3.3.2), (A2.1) + (B3.3.3), (A2.1) + (B3.3.4), (A2.1) + (B3.3.5), (A2.1) + (B3.3.6) und (A2.1) + (B3.3.7),

Dabei sind die obengenannten Aufwandmengenbereiche und Mengenverhältnisse jeweils bevorzugt.

In Einzelfällen kann es sinnvoll sein, eine oder mehrere, vorzugsweise eine der Verbindungen (A) mit mehreren Verbindungen (B) aus den Klassen (B1), (B2) und (B3) zu kombinieren.

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.

Zusatzstoffe sind beispielsweise Düngemittel und Farbstoffe.

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Avena spp., Alopecurus spp., Brachiaria spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden

Unkräutern.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden kann, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsem, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.
Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertreffen.

Obgleich die erfindungsgemäßen Kombinationen eine ausgezeichnete herbizide Aktivität gegenüber mono- und dikotylen Unkräutern aufweisen, werden die Kulturpflanzen nur unwesentlich oder gar nicht geschädigt.
Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Emtegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431 ).
Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).
Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), dadurch gekennzeichnet, daß man ein oder mehrere Herbizide des Typs (A) mit einem oder mehreren Herbiziden des Typs (B) auf die Schadpflanzen, Pflanzenteile davon oder die Anbaufläche appliziert. Gegenstand der Erfindung ist auch die Verwendung der neuen Kombinationen aus Verbindungen (A)+(B) zur Bekämpfung von Schadpflanzen, vorzugsweise in Pflanzenkulturen.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'dinaphthyimethan-6,6'-disulfonsaures Natrium, dibutylnaphthalinsulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt Als Emulgatoren können beispielsweise verwendet werden: Alkylarylsulfonsaure CalciumSalze wie Ca-Dodecylbenzotsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:

In Spritzpulvem beträgt die Wirkstoffkonzentration z.B. etwa 10 bis 95 Gew.-%, der
Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.
Staubförmige Formulierungen enthalten meistens 5 bis 20 Gew.-% an Wirkstoff, versprühbare Lösungen etwa 0,2 bis 25 Gew.-% Wirkstoff.
Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der Imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvem, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B)

hat den Vorteil der leichteren Anwendbarkeit, weil die Mengen der Komponenten bereits im richtigen Verhältnis zueinander eingestellt sind.

Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines WirkstoffslWirksstoffgemischs und 90 Gew. -Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teiten Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man
75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Töpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauftaufwirksamkeit gegen ein breites Spektrum von Ungräsem und Unkräutern auf.

Bonitur und Bewertung der synergistischen Herbizidwirkungen:

Die herbizide Wirksamkeit der Wirkstoffe bzw. Wirkstoffmischungen wurde anhand der behandelten Parzellen im Vergleich zu unbehandelten Kontroll-Parzellen visuell bonitiert. Dabei wurde Schädigung und Entwicklung aller

oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ ist kann in manchen Fällen beobachtet werden, daß eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.

Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. in % bei a bzw. b g AS/ha; E = Erwartungswert in % bei a+b g AS/ha.

Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent (vgl. Beispiel 1) oder als Sequenzbehandlung teilweise preemergent und/oder postemergent.

Nach der Anwendung, z. B. 2, 4, 6 und 8 Wochen nach Applikation die Wirkung der Präparate optisch im Vergleich zu unbehandelten Kontrollen bonitiert (vgl. Bonitur in Beispiel 1). Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, daß die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby (vgl. Bonitur in Beispiel 1) und weisen deshalb ebenfalls auf einen Synergismus hin. Die Kulturpflanzen dagegen wurden infolge der Behandlungen mit den herbiziden Mitteln nicht oder nur unwesentlich geschädigt.

Spezielle Versuchsbeispiele

In den nachfolgenden Tabellen sind teilweise Erwartungswerte nach Colby angegeben; siehe jeweils Erwartungswerte E in Klammern (E =...).

Tabelle 1:

| Herbizide Wirkung und Selektivität in Mais | | | |
|---|---|---|---|
| Wirkstoff(e) | Dosis[1)] g AS/ha | Herbizide Wirkung[2)] (%) gegen Ipomoea purpurea | Schädigung[2)] (%) an Mais |
| (A1.1)$^S$ | 45 | 78 | 0 |
| | 60 | 88 | 2 |
| | 75 | 90 | 4 |
| (B1.2.1) | 1000 | 70 | 0 |
| | 2000 | 85 | 0 |
| | 3000 | 90 | 0 |
| (A1.1)$^s$ + (B1.2.1) | 75 + 1000 | 98 (E=93) | 0 |

Abkürzung zu Tabelle 1:
1) = Applikation jeweils postemergent,
2) = Bonitur 3 Wochen nach Applikation
g AS/ha = Gramm Aktivsubstanz (= 100% Wirkstoff) pro Hektar
(A1.1 )$^S$ = N-[N-(4,6-Dimethoxypyrimidin-2-yl)-aminocarbonyl]-2-(dimethylaminocarbonyl)-5-(formylamino)-benzolsulfonamid (A.1.1) in Kombination mit dem Safener (S1-9),
(S1-9) = 5,5-Diphenyl-2-isoxazolin-carbonsäureethylester
(B1.2.1) = Atrazin

Tabelle 2:

| Herbizide Wirkung und Selektivität in Mais | | | | |
|---|---|---|---|---|
| Wirkstoff(e) | Dosis[1)] g AS/ha | Herbizide Wirkung[2)](%) | | Schädigung[2)] (%) an Mais |
| | | ABUTH | PHBPU | |
| (A1.1) | 35 (po) | 88 | 45 | 0 |
| (B1.1.2) + (B1.2.1) | 1120 + 1120 (pe) | 43 | 5 | 0 |
| (A1.1)+ (B1.1.2)+ (B1.2.1) | (1120 + 1120)(pe) + 35 (po) | 98 (E=93) | 92 (E=50) | 2 |

Abkürzung zu Tabelle 2:
1) = Applikation jeweils postemergent,
2) = Bonitur 3 Wochen nach Applikation
(pe) = preemergent appliziert, (po) = postemergent appliziert
g AS/ha = Gramm Aktivsubstanz (= 100% Wirkstoff) pro Hektar
(A1.1) = N-[N-(4,6-Dimethoxypyrimidin-2-yl)-aminocarbonyl]-2-(dimethylaminocarbonyl)-5-(formylamino)-benzolsulfonamid
(B1.2.1) = Atrazin
(B1.1.2) = Metolachlor
ABUTH = Abutilon theophrasti
PHBPU = Pharbitis purpurea

Tabelle 3:

| Herbizide Wirkung und Selektivität in Mais | | | | |
|---|---|---|---|---|
| Wirkstoff(e) | Dosis[1)] g AS/ha | Herbizide Wirkung[2)] (%) | | Schädigung[2)] (%) an Mais |
| | | IPOPU | SIDSP | |
| (A1.1) | 15 | 43 | 0 | 0 |
| | 30 | 67 | 20 | 0 |
| | 45 | 70 | 30 | 1 |
| | 60 | 83 | 50 | 6 |

Tabelle 3: (fortgesetzt)

| Herbizide Wirkung und Selektivität in Mais | | | | |
|---|---|---|---|---|
| Wirkstoff(e) | Dosis[1)] g AS/ha | Herbizide Wirkung[2)] (%) | | Schädigung[2)] (%) an Mais |
| | | IPOPU | SIDSP | |
| (B2.2.1) | 300 | 53 | 70 | 0 |
| (A1.1) + (B2.2.1) | 30 + 300 | 87 (E=85) | 80 (E=76) | 3 |

Tabelle 4:

| Herbizide Wirkung und Selektivität in Mais | | | | |
|---|---|---|---|---|
| Wirkstoff(e) | Dosis[3)] g AS/ha | Herbizide Wirkung[4)] (%) | | Schädigung[4)] (%) an Mais |
| | | CHEAL | POLCO | |
| (A1.1) | 30 | 58 | 20 | 0 |
| | 45 | 69 | 30 | 0 |
| | 60 | 85 | 30 | 0 |
| (B2.2.1) | 300 | 75 | 45 | 0 |
| (A1.1) + (B2.2.1) | 45 + 300 | 98 (E=92) | 80(30+45) | 0 |

Abkürzung zu Tabellen 3 und 4, siehe Tabelle 2 und zusätzlich:
1),3) = Applikation jeweils postemergent
2) = Bonitur 6 Wochen nach Applikation
4) = Bonitur 40 Tage nach Applikation
(B2.2.1) = Bromoxynil
CHEAL = Chenopodium album
POLCO = Polygonum convolvulus
IPOPU = Ipomoea purpureum SIDSP = Sida spinosa

Tabelle 5:

| Herbizide Wirkung und Selektivität in Mais | | | |
|---|---|---|---|
| Wirkstoff(e) | Dosis[1)] g AS/ha | Herbizide Wirkung[2)] (%) gegen SIDSP | Schädigung[2)] (%) an Mais |
| (A1.1) | 15 | 0 | 0 |
| | 30 | 20 | 0 |
| | 45 | 30 | 1 |
| | 60 | 50 | 6 |
| (B2.3.3) | 900 | 10 | 0 |
| (A1.1) + (B2.3.3) | 30 + 900 | 80 (20+10) | 2 |

Abkürzungen zu Tabelle 5, siehe Tabelle 2 und zusätzlich:
1) = Applikation jeweils postemergent;
2) = Bonitur 3 Wochen nach Applikation
(B2.3.3) = Pyridate
SIDSP = Sida spinosa

Tabelle 6:

| Herbizide Wirkung und Selektivität in Mais | | | |
|---|---|---|---|
| Wirkstoff(e) | Dosis[1)] g AS/ha | Herbizide Wirkung[2)] (%) gegen AGRRE | Schädigung[2)] (%) an Mais |
| (A1.1)[s] | 30 | 0 | 0 |
| | 45 | 0 | 0 |
| | 60 | 5 | 5 |
| (B2.4.5) | 2,5 | 0 | 10 |
| | 5 | 10 | 20 |
| | 7,5 | 10 | 30 |
| (A1.1)[s] + (B2.4.5) | 30 + 2,5 | 85 (0+0) | 0 |
| | 30 + 5 | 90 (0 +10) | 7 |
| Abkürzungen zu Tabelle 6, siehe Tabelle 1 und zusätzlich: (B2.4.5) = Iodosulfuron-methyl AGRRE = Agropyron repens | | | |

Tabelle 7:

| Herbizide Wirkung und Selektivität in Mais | | | |
|---|---|---|---|
| Wirkstoff(e) | Dosis[1)] g AS/ha | Herbizide Wirkung[2)] (%) gegen AMASP | Schädigung[2)] (%) an Mais |
| (A1.1) | 15 | 0 | 0 |
| | 30 | 38 | 0 |
| | 45 | 60 | 1 |
| | 60 | 70 | 6 |
| (82.4.5) | 2,5 | 36 | 1 |
| | 5 | 75 | 1 |
| (A1.1)+ (B2.4.5) | 15+2,5 | 78 (0 + 36) | 2 |
| | 15 + 5 | 85 (0 + 75) | 5 |
| Abkürzungen zu Tabelle 7, siehe Tabellen 2 und 6 und zusätzlich: AMASP = Amaranthus spinosus | | | |

Tabelle 8:

| Herbizide Wirkung | | | |
|---|---|---|---|
| Wirkstoff(e) | Dosis[1)] g AS/ha | Herbizide Wirkung[2)] (%) gegen | |
| | | Avena sterilis | Chrysanthemum coronarium |
| (A1.1) | 60 | 83 | 20 |
| (B3.1.1) | 270 | 10 | 10 |
| | 450 | 30 | 25 |
| (A1.1)+ (B3.1.1) | 60 + 270 | 94 (83 + 10) | 83 |

Abkürzungen zu Tabelle 8:
1) = Applikation jeweils postemergent;
2) = Bonitur 46 Tage nach Applikation
(A1.1) = siehe Tabelle 2
(B3.1.1) = Glufosinate-monoammoniumsalz

Tabelle 9:

| Herbizide Wirkung und Selektivität in Mais | | | | |
|---|---|---|---|---|
| Wirkstoff(e) | Dosis[1)]g AS/ha | Herbizide Wirkung[2)] (%) | | Schädigung[2)] (%) an Mais |
| | | ECHCG | CHEAL | |
| (A1.1) | 120 | 65 | 65 | 10 |
| | 60 | 35 | 40 | 10 |
| | 30 | 5 | 25 | 10- |
| | 15 | 0 | 5 | 10 |
| (B1.3.1) | 60 | 89 | 90 | 0 |
| | 30 | 88 | 65 | 0 |
| | 15 | 88 | 55 | 0 |
| (A1.1)+ (B1.3.1) | 30 + 30 | 90 (E = 89) | 90 (E=73) | 10 |
| | 15 + 30 | 99 (0 + 88) | 88 (5+65) | 10 |
| | 30 + 15 | 97 (5+88) | 80 (E=66) | 15 |
| (B1.1.2) | 2000 | 55 | 0 | 0 |
| | 1000 | 45 | 0 | 0 |
| | 500 | 40 | 0 | 0 |
| (A1.1) + (B1.1.2) | 30 + 1000 | 98 (5+45) | 90 (25+0) | 15 |
| | 15 + 1000 | 98 (0+45) | 90 (5+0) | 5 |
| | 30 + 500 | 93 (5+40) | 83 (25+0) | 10 |

Abkürzungen zu Tabellen 9:
1) = Bonitur 3 Wochen nach Applikation
2) = postemergent appliziert
g AS/ha = Gramm Aktivsubstanz (= 100% Wirkstoff) pro Hektar
(A1.1) = s. Tab. 2
(B1.1.2) = Metolachlor
(B1.3.1) = Nicosulfuron
CHEAL = Chenopodium album
ECHCG = Echinochloa crus-galli

Tabelle 10:

| Herbizide Wirkung und Selektivität in Mais | | | | | |
|---|---|---|---|---|---|
| Wirkstoff(e) | Dosis[1)] g AS/ha | Herbizide Wirkung[2)] (%) | | | Schädigung[2)] (%) an Mais |
| | | ECHCG | SOLNI | XANOR | |
| (A1.1) | 120 | 65 | 90 | 60 | 10 |
| | 60 | 35 | 90 | 60 | 10 |
| | 30 | 5 | 83 | 55 | 10 |
| | 15 | 0 | 65 | 45 | 10 |

Abkürzungen zu Tabelle 10:
1) = Bonitur 3 Wochen nach Applikation
2) = postemergent appliziert
g AS/ha = Gramm Aktivsubstanz (= 100% Wirkstoff) pro Hektar
(A1.1) = s. Tab. 2
(B1.3.2) = Rimsulfuron
(B2.4.1) = Pendimethalin
ECHCG = Echinochloa crus-galli
XANOR = Xanthium orientalis

Tabelle 10: (fortgesetzt)

| Herbizide Wirkung und Selektivität in Mais | | | | | |
|---|---|---|---|---|---|
| Wirkstoff(e) | Dosis[1)] g AS/ha | Herbizide Wirkung[2)] (%) | | | Schädigung[2)] (%) an Mais |
| | | ECHCG | SOLNI | XANOR | |
| (B1.3.2) | 12 | 97 | 60 | - | 0 |
| | 6 | 93 | 45 | | 0 |
| | 3 | 93 | 35 | | 0 |
| (A1.1)+ (B1.3.2) | 30 + 6 | 99 (5+93) | 98 (E=91) | - | 15 |
| | 15 + 6 | 99(0+93) | 97 (E=81) | | 15 |
| | 30 + 3 | 99 (5+93) | 98 (E=89) | | 15 |
| (B2.4.1) | 2000 | 65 | - | 10 | 0 |
| | 1000 | 65 | | 0 | 8 |
| | 500 | 65 | | 0 | 8 |
| (A1.1) + (B2.4.1) | 30 + 1000 | 83 (5+65) | - | 60 (55+0) | 15 |
| | 15 + 1000 | 85(0+65) | | 60(45+0) | 5 |
| | 30 + 500 | 80 (5+65) | | 70 (55+0) | 10 |

Abkürzungen zu Tabelle 10:
1) = Bonitur 3 Wochen nach Applikation
2) = postemergent appliziert
g AS/ha = Gramm Aktivsubstanz (= 100% Wirkstoff) pro Hektar
(A1.1) = s. Tab. 2
(B1.3.2) = Rimsulfuron
(B2.4.1) = Pendimethalin
ECHCG = Echinochloa crus-galli
XANOR = Xanthium orientalis

Tabelle 11:

| Herbizide Wirkung und Selektivität in Mais | | | | |
|---|---|---|---|---|
| Wirkstoff(e) | Dosis[1)] g AS/ha | Herbizide | Wirkung[2)] (%) | Schädigung[2)] (%) an Mais |
| | | ECHCG | SETVI | |
| (A1.1) | 120 | 65 | 89 | 10 |
| | 60 | 35 | 83 | 10 |
| | 30 | 5 | 75 | 10 |
| | 15 | 0 | 55 | 10 |
| (B1.2.1) | 2000 | 78 | 10 | 10 |
| | 1000 | 35 | 0 | 0 |
| | 500 | 20 | 0 | 0 |

Abkürzungen zu Tabelle 11:
1) = Bonitur 3 Wochen nach Applikation
2) = postemergent appliziert
g AS/ha = Gramm Aktivsubstanz (= 100% Wirkstoff) pro Hektar
(A1.1) = s. Tab. 2
(B1.2.1) = Atrazin
(B1.4.2) = Sulcotrione
ECHCG = Echinochloa crus-galli
SETVI = Setaria viridis

Tabelle 11: (fortgesetzt)

| Herbizide Wirkung und Selektivität in Mais | | | | |
|---|---|---|---|---|
| Wirkstoff(e) | Dosis[1)] g AS/ha | Herbizide | Wirkung[2)] (%) | Schädigung[2)] (%) an Mais |
| | | ECHCG | SETVI | |
| (A1.1)+ (B1.2.1) | 30 + 1000 | 85 (5+35) | 90(75+0) | 0 |
| | 15 + 1000 | 80 (0+35) | 85 (55+0) | 0 |
| | 30 + 500 | 75 (5+20) | 83 (75+0) | 0 |
| (B1.4.2) | 600 | 97 | 90 | 0 |
| | 300 | 83 | 40 | 0 |
| | 150 | 80 | 20 | 0 |
| (A1.1) + (B1.4.2) | 30 + 300 | 93 (5+83) | 99 (E=80) | 0 |
| | 15 + 300 | 90 (0+83) | 97 (55+40) | 0 |
| | 30 + 150 | 88 (5+80) | 98 (75+20) | 0 |

Abkürzungen zu Tabelle 11:
1) = Bonitur 3 Wochen nach Applikation
2) = postemergent appliziert
g AS/ha = Gramm Aktivsubstanz (= 100% Wirkstoff) pro Hektar
(A1.1) = s. Tab. 2
(B1.2.1) = Atrazin
(B1.4.2) = Sulcotrione
ECHCG = Echinochloa crus-galli
SETVI = Setaria viridis

Tabelle 12:

| Herbizide Wirkung und Selektivität in Mais | | | | |
|---|---|---|---|---|
| Wirkstoff(e) | Dosis[1)] g AS/ha | Herbizide | Wirkung[2)] (%) | Schädigung[2)] (%) an Mais |
| | | ECHCG | POLCO | |
| (A1.1) | 120 | 65 | 30 | 10 |
| | 60 | 35 | 30 | 10 |
| | 30 | 5 | 25 | 10 |
| | 15 | 0 | 5 | 10 |
| (B3.2.1) | 1000 | 98 | 82 | - |
| | 500 | 83 | 78 | |
| | 250 | 73 | 55 | |
| (A1.1) + (B3.2.1) | 30 + 500 | 100 (5+83) | 93 (E=84) | - |
| | 30 + 250 | 100 (5+73) | 83 (25+55) | |
| | 15 + 250 | 100 (0+73) | 78 (5+55) | |

Abkürzungen zu Tabelle 12:
1) = Bonitur 3 Wochen nach Applikation
2) = postemergent appliziert
g AS/ha = Gramm Aktivsubstanz (= 100% Wirkstoff) pro Hektar
Abkürzungen zu Tabelle 12 (Fortsetzung):
(A1.1) = s. Tab. 2
(B3.2.1) = Glyphosate-isopropylammonium
(B1.3.3) = Primisulfuron
(B1.2.5) = Metribuzin
ECHCG = Echinochloa crus-galli
POLCO = Polygonum convolvulus

Tabelle 12: (fortgesetzt)

| Herbizide Wirkung und Selektivität in Mais | | | | |
|---|---|---|---|---|
| Wirkstoff(e) | Dosis[1)] g AS/ha | Herbizide | Wirkung[2)] (%) | Schädigung[2)] (%) an Mais |
| | | ECHCG | POLCO | |
| (B1.3.3) | 40 | 5 | 68 | 15 |
| | 20 | 3 | 63 | 0 |
| | 10 | 0 | 60 | 0 |
| (A1.1) + (B1.3.3) | 30 + 20 | 55 (5+3) | 90 (25+63) | 0 |
| | 15 + 20 | 50 (0+3) | 80 (5+63) | 0 |
| | 30 + 10 | 45 (5+0) | 88 (25+60) | 5 |
| (B1.2.5) | 200 | 89 | 80 | 25 |
| | 100 | 75 | 65 | 20 |
| | 50 | 5 | 45 | 15 |
| (A1.1) + (B1.2.5) | 30 + 100 | 92 (5+75) | 93 (25+65) | 0 |
| | 15 + 100 | 95 (0+75) | 90 (5+65) | 0 |
| | 30 + 50 | 83 (5+5) | 75 (25+45) | 0 |

Abkürzungen zu Tabelle 12:
1) = Bonitur 3 Wochen nach Applikation
2) = postemergent appliziert
g AS/ha = Gramm Aktivsubstanz (= 100% Wirkstoff) pro Hektar
Abkürzungen zu Tabelle 12 (Fortsetzung):
(A1.1) = s. Tab. 2
(B3.2.1) = Glyphosate-isopropylammonium
(B1.3.3) = Primisulfuron
(B1.2.5) = Metribuzin
ECHCG = Echinochloa crus-galli
POLCO = Polygonum convolvulus

Tabelle 13:

| Herbizide Wirkung und Selektivität in Mais | | | |
|---|---|---|---|
| Wirkstoff(e) | Dosis[1)] g AS/ha | Herbizide Wirkung[2)] (%) EPHHL | Schädigung[2)] (%) an Mais |
| (A1.1) | 30 | 70 | 8 |
| (B1.4.4) | 100 | 63 | 5 |
| | 150 | 73 | 13 |
| (A1.1)+(B1.4.4) | 30+50 | 90 | 8 |

1) = Bonitur 3 Wochen nach Applikation
2) = postemergent appliziert
g AS/ha = Gramm Aktivsubstanz pro Hektar
(A.1.1) = s. Tab. 2
(B1.4.4) = 2-(4-Mesyl-2-nitrobenzoyl)-cyclohexan-1,3-dion (Mesotrione)
EPHHL = Euphorbia heterophylla

Tabelle 14:

| Herbizide Wirkung und Selektivität in Mais | | | |
|---|---|---|---|
| Wirkstoff(e) | Dosis[1)] g AS/ha | Herbizide Wirkung[2)] (%) polygonum convolvulus | Schädigung[2)] (%) an Mais |
| (A1.1) | 30 | 50 | 8 |
| | 15 | 35 | 6 |
| | 7,5 | 10 | 0 |
| (B1.2.3) = Cyanazin | 2200 | 75 | 15 |
| | 1100 | 55 | 12 |
| | 550 | 20 | 5 |
| (A1.1) + (B1.2.3) | 7,5 + 2200 | 96 (10+75) | 12 |
| | 7,5 + 1100 | 78 (10+55) | 9 |

Abkürzung zu Tabelle 14:
1) = Bonitur 4 Wochen nach Applikation
2) = postemergent appliziert
(A1.1) = siehe Tabelle 2

Tabelle 15:

| Herbizide Wirkung und Selektivität in Mais | | | |
|---|---|---|---|
| Wirkstoff(e) | Dosis[1)] g AS/ha | Herbizide Wirkung[2)] (%) Polygonum convolvulus | Schädigung[2)] (%) an Mais |
| (A1.1) | 30 | 65 | 6 |
| | 15 | 35 | 3 |
| | 7,5 | 10 | 1 |
| (B1.1.4)= Dimethenamid | 900 | 40 | 0 |
| | 450 | 20 | 0 |
| (B1.2.7) = Fluthiamid | 600 | 25 | 0 |
| (B1.5.1) = Metosulam | 20 | 55 | 0 |
| (A1.1) + (B1.1.4) | 30 + 450 | 85 (65 + 20) | 5 |
| | 7,5 + 900 | 80(10+40) | 1 |
| (A1.1) + (B1.2.7) | 30 + 600 | 93 (65 + 25) | 5 |
| | 7,5 + 600 | 75 (10 + 25) | 3 |
| (A1.1) + (B1.5.1) | 15 + 20 | 93 (35 + 55) | 12 |
| | 7,5 + 20 | 75 (10+55) | 6 |

Abkürzung zu Tabelle 15:
1) = Bonitur 4 Wochen nach Applikation
2) = postemergent appliziert
(A1.1) = siehe Tabelle 2

Tabelle 16:

| Herbizide Wirkung und Selektivität in Mais | | | |
|---|---|---|---|
| Wirkstoff(e) | Dosis[1)]g AS/ha | Herbizide Wirkung[2)] (%) Convolvulus arvensis | Schädigung[2)] (%) an Mais |
| (A1.1) | 60 | 65 | 8 |
| | 30 | 40 | 6 |
| | 15 | 30 | 4 |
| (B2.5.2) = MCPA | 1500 | 85 | 10 |
| | 750 | 50 | 6 |
| | 375 | 30 | 0 |
| (A1.1) + (B2.5.2) | 30 + 750 | 95 (40+50) | 8 |
| | 30 + 375 | 80 (40 + 30) | 6 |
| | 15 + 750 | 85 (30 + 50) | 7 |
| | 60 + 375 | 98 (65 + 30) | 9 |

Abkürzung zu Tabelle 16:
1) = Bonitur 4 Wochen nach Applikation
2) = postemergent appliziert
(A1.1) = siehe Tabelle 2

Tabelle 17:

| Herbizide Wirkung und Selektivität in Mais | | | |
|---|---|---|---|
| Wirkstoff(e) | Dosis[1)]g AS/ha | Herbizide Wirkung[2)] (%) Digitaria sanguinalis | Schädigung[2)] (%) an Mais |
| (A1.1) | 60 | 75 | 8 |
| | 30 | 55 | 6 |
| | 15 | 35 | 5 |
| (B1.1.1) = Alachlor | 2000 | 65 | 0 |
| | 1000 | 50 | 0 |
| | 500 | 40 | 0 |
| (A1.1) + (B1.1.1) | 15 + 1000 | 93 (35 + 50) | 5 |
| | 30 + 500 | 97 (55 + 40) | 6 |
| (B1.1.3) = Acetochlor | 2000 | 85 | 0 |
| | 1000 | 50 | 0 |
| | 500 | 25 | 0 |
| (A1.1) + (B1.1.3) | 30 + 500 | 89 (55 + 25) | 2 |
| | 15 + 500 | 78 (35 + 25) | 1 |
| | 15 + 1000 | 92 (35 + 50) | 4 |

Abkürzung zu Tabelle 17:
1) = Bonitur 4 Wochen nach Applikation
2) = postemergent appliziert
(A1.1)[S] = siehe Tabelle 1

Tabelle 18:

| Herbizide Wirkung und Selektivität in Mais | | | |
|---|---|---|---|
| Wirkstoff(e) | Dosis[1)]g AS/ha | Herbizide Wirkung[2)] (%) Digitaria sanguinalis | Schädigung[2)] (%) an Mais |
| (A1.1)$^S$ | 45 | 7,3 | 8 |
| | 22,5 | 45 | 6 |
| | 12,5 | 28 | 5 |
| (B1.4.6) = Isoxachlortole | 25 | 45 | 12 |
| | 12,5 | 30 | |
| (A1.1)$^s$ + (B1.4.6) | 12,5 + 25 | 78 (28 + 45) | 15 |
| | 12,5 + 12,5 | 75 (28 + 30) | 18 |

Abkürzung zu Tabelle 18:
1) = Bonitur 4 Wochen nach Applikation
2) = postemergent appliziert
(A1.1)$^S$ = siehe Tabelle 1

Tabelle 19:

| Herbizide Wirkung und Selektivität in Mais | | | |
|---|---|---|---|
| Wirkstoff(e) | Dosis[1)]g AS/ha | Herbizide Wirkung[2)] (%) Cirsium avense | Schädigung[2)] (%) an Mais |
| (A1.1)$^S$ | 60 | 65 | 8 |
| | 30 | 35 | 6 |
| | 15 | 20 | 5 |
| (B2.3.6) = Clopyralid | 120 | 88 | 3 |
| | 60 | 60 | 0 |
| | 30 | 20 | 0 |
| (A1.1)$^s$ + (B2.3.6) | 30 + 30 | 75 (35 + 20) | 2 |
| | 30 + 60 | 98 (35 + 60) | 5 |
| | 60 + 30 | 88 (65 + 20) | 4 |

Abkürzung zu Tabelle 19:
1) = Bonitur 3 Wochen nach Applikation
2) = postemergent appliziert
(A1.1)$^S$ = siehe Tabelle 1

Tabelle 20:

| Herbizide Wirkung und Selektivität in Mais | | | |
|---|---|---|---|
| Wirkstoff(e) | Dosis[1)] g AS/ha | Herbizide Wirkung[2)] (%) Ipomoea hederacea | Schädigung[2)] (%) an Mais |
| (A1.1) | 60 | 75 | 12 |
| | 30 | 60 | 10 |
| | 15 | 10 | 8 |

Abkürzung zu Tabelle 20:
1) = Bonitur 3 Wochen nach Applikation
2) = postemergent appliziert
(A1.1) = siehe Tabelle 2

Tabelle 20: (fortgesetzt)

| Herbizide Wirkung und Selektivität in Mais | | | |
|---|---|---|---|
| Wirkstoff(e) | Dosis[1)] g AS/ha | Herbizide Wirkung[2)] (%) Ipomoea hederacea | Schädigung[2)] (%) an Mais |
| (B1.4.3) = Dicamba | 240 | 85 | 8 |
| | 120 | 75 | 6 |
| | 60 | 40 | 5 |
| (A1.1)+ (B1.4.3) | 15 + 60 | 75 (25 + 40) | 8 |
| | 15 +120 | 90 (10 + 75) | 10 |
| | 30 + 60 | 95 (60 + 30) | 9 |

Abkürzung zu Tabelle 20:
1) = Bonitur 3 Wochen nach Applikation
2) = postemergent appliziert
(A1.1) = siehe Tabelle 2

Tabelle 21:

| Herbizide Wirkung und Selektivität in Mais | | | |
|---|---|---|---|
| Wirkstoff(e) | Dosis[1)] g AS/ha | Herbizide Wirkung[2)] (%) Chenopodium album Chenopodium album | Schädigung[2)] (%) an Mais (IR) |
| (A.1.1)$^{s}$ | 60 | 85 | 12 |
| | 30 | 60 | 8 |
| | 15 | 35 | 6 |
| (B3.3.2) = Imazethapyr | 70 | 65 | 8 |
| | 50 | 40 | 6 |
| | 30 | 25 | 4 |
| (A1.1)$^{s}$ + (B3.3.2) | 30 + 30 | 93 (60 + 25) | 12 |
| | 15 + 30 | 78 (35 + 25) | 6 |
| | 15 + 50 | 83 (35 + 40) | 8 |

Abkürzung zu Tabelle 21:
1) = Bonitur 4 Wochen nach Applikation
2) = postemergent appliziert
(A1.1)$^{S}$ = siehe Tabelle 1
Mais (IR) = Imidazolinon - resistenter Mais

Tabelle 22:

| Herbizide Wirkung und Selektivität in Mais | | | |
|---|---|---|---|
| Wirkstoff(e) | Dosis[1)]g AS/ha | Herbizide Wirkung[2)] (%) Lolium multiflorum | Schädigung[2)] (%) an Mais (SR) |
| (A1.1)[s] | 50 | 85 | 10 |
| | 25 | 60 | 8 |
| | 12,5 | 30 | 5 |
| (B1.6.33) = Sethoxidim | 400 | 88 | 3 |
| | 200 | 62 | 2 |
| | 100 | 35 | 0 |
| (A1.1)[s] + (B1.6.33) | 12,5 + 100 | 78 (30 + 35) | 3 |
| | 12,5 + 200 | 95 (30 + 62) | 5 |
| | 25 + 100 | 97 (60 + 35) | 8 |

Abkürzung zu Tabelle 22:
1) = Bonitur 4 Wochen nach Applikation
2) = postemergent appliziert
(A1.1)[S] = siehe Tabelle 1
Mais (SR) = Sethooidim - resistenter Mais

Tabelle 23:

| Herbizide Wirkung | | |
|---|---|---|
| Wirkstoff(e) | Dosis[1)] g AS/ha | Herbizide Wirkung[2)] (%) Setaria viridis |
| (A1.1) | 30 | 75 |
| | 15 | 45 |
| | 7,5 | 25 |
| (B1.7.5) = Diclofopmethyl | 720 | 65 |
| (A1.1) + (B1.7.5) | 7,5 + 720 | 93 (25 + 65) |

Abkürzung zu Tabelle 23:
1) = Bonitur 4 Wochen nach Applikation
2) = postemergent appliziert
(A1.1) = siehe Tabelle 2

Tabelle 24:

| Herbizide Wirkung und Selektivität in Reis | | | |
|---|---|---|---|
| Wirkstoff(e) | Dosis[1)] g AS/ha | Herbizide Wirkung[2)] (%) Brachiaria plantophylla | Schädigung[2)] (%) an Reis |
| A) (A1.1) | 45 | 65 | 25 |
| | 22,5 | 45 | 15 |
| (B1.6.27) = Fenoxa-propp-ethyl | 60 | 70 | 8 |
| | 30 | 30 | 0 |

Abkürzung zu Tabelle 24:
1) = Bonitur 6 Wochen nach Applikation
2) = postemergent appliziert
(A1.1) = siehe Tabelle 2

Tabelle 24: (fortgesetzt)

| Herbizide Wirkung und Selektivität in Reis | | | |
|---|---|---|---|
| Wirkstoff(e) | Dosis[1)] g AS/ha | Herbizide Wirkung[2)] (%) Brachiaria plantophylla | Schädigung[2)] (%) an Reis |
| (A1.1) + (B1.6.27) | 22,5 + 30 | 83(45+30) | 22 |
| (B2.5.8) = Ethoxysulfuron | 60<br>30 | 20<br>0 | 0<br>0 |
| (A1.1) + (B2.5.8) | 22,5 + 30 | 50 (45 + 0) | 18 |
| (B1.6.11) = Anilofos | 450 | 35 | 8 |
| (A1.1) + (B1.6.11) | 22,5 + 450 | 83 (45 + 35) | 28 |

Abkürzung zu Tabelle 24:
1) = Bonitur 6 Wochen nach Applikation
2) = postemergent appliziert
(A1.1) = siehe Tabelle 2

Tabelle 25:

| Herbizide Wirkung und Selektivität in Weizen | | | |
|---|---|---|---|
| Wirkstoff(e) | Dosis[1)]g AS/ha | Herbizide Wirkung[2)] (%) Polygonus convolvulus | Schädigung[2)] (%) an Weizen |
| (A1.1) | 30<br>15 | 65<br>25 | 85<br>65 |
| (B2.4.4) = Amidosulfuron | 30<br>15 | 55<br>35 | 0<br>0 |
| (A1.1) + (B2.4.4) | 15 + 30 | 72 ( 25 + 35) | 75 |

Abkürzung zu Tabelle 25:
1) = Bonitur 4 Wochen nach Applikation
2) = postemergent appliziert
(A1.1) = siehe Tabelle 2

**Patentansprüche**

**1.** Herbizid-Kombinationen mit einem wirksamen Gehalt an Komponenten (A) und (B), wobei

(A) ein oder mehrere Herbizide aus der Gruppe der Verbindungen der Formel (I) oder deren Salzen bedeutet,

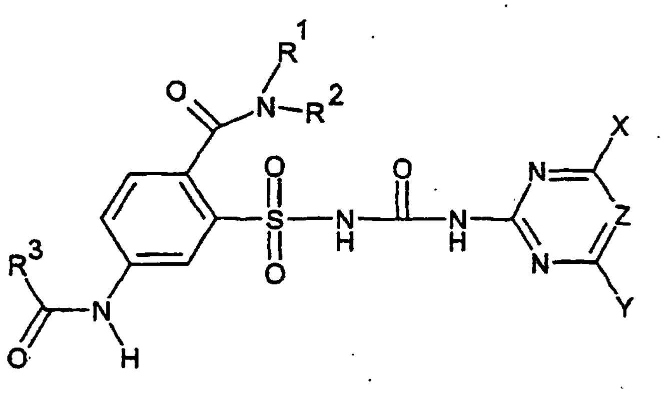

(I)

worin

$R^1$ Wasserstoff oder $(C_1-C_4)$Alkyl,
$R^2$ Wasserstoff oder $(C_1-C_4)$Alkyl,
$R^3$ H, $(C_1-C_4)$Alkyl, $(C_1-C_4)$Alkoxy, $(C_2-C_4)$Alkenoxy, $(C_2-C_4)$Alkinoxy, $(C_3-C_6)$Cycloalkyl, wobei jeder der 5 letztgenannten Reste unsubstituiert oder durch einen oder mehrere Reste aus der Gruppe Halogen, Cyano, $(C_1-C_4)$Alkoxy und $(C_1-C_4)$Alkylsulfonyl substituiert ist,
einer der Reste X und Y Halogen, $(C_1-C_4)$Alkyl, $(C_1-C_4)$Alkoxy, $(C_1-C_4)$Alkylthio, wobei jeder der drei letztgenannten Reste unsubstituiert oder durch einen oder mehrere Reste aus der Gruppe Halogen, $(C_1-C_4)$Alkoxy und $(C_1-C_4)$Alkylthio substituiert ist,
und der andere der Reste X und Y $(C_1-C_4)$Alkyl, $(C_1-C_4)$Alkoxy oder $(C_1-C_4)$Alkylthio, wobei jeder der drei letztgenannten Reste unsubstituiert oder durch einen oder mehrere Reste aus der Gruppe Halogen, $(C_1-C_4)$Alkoxy und $(C_1-C_4)$Alkylthio substituiert ist, und
Z CH oder N bedeuten,

und
(B) ein oder mehrere Herbizide aus der Gruppe der Verbindungen, bestehend aus (B1.1.1) Alachlor, (B1.1.2) Metolachlor, (B1.1.3) Acetochlor, (B 1.1.4) Dimethenamid, (B 1.1.5) Pethoxamid, (B1.2.1) Atrazin, (B1.2.2) Simazin, (B1.2.3) Cyanazin, (B1.2.4) Terbuthylazin, (B1.2.5) Metribuzin, (B1.2.6) Isoxaflutole, (B1.2.7) Fluthiamid, (B1.2.8) Terbutryn, (B1.3.1) Nicosulfuron, (B1.3.2) Rimsulfuron, (B1.3.3) Primisulfuron, (B1.4.1) Pendimethalin, (B1.4.2) Sulcotrione, (B1.4.3) Dicamba, (B1.4.4) Mesotrione, (B1.4.5) Linuron, (B1.4.6) Isoxachtortole, (B1.4.7) Benoxacor, (B1.5.1) Metosulam, (B1.5.2) Flumetsulam, (B1.5.3) Cloransulam, (B1.5.4) Florasulam, (B1.6.1) Molinate, (B1.6.2) Thiobencarb, (B1.6.3) Quinchlorac, (B1.6.4) Propanil, (B1.6.5) Pyribenzoxim, (B1.6.6) Butachlor, (B1.6.7) Pretilachlor, (B1.6.8) Clomazone, (B1.6.9) Oxadiargyl, (B1.6.10) Oxaziclomefone, (B1.6.11) Anilofos, (B1.6.12) Cafenstrole, (B1.6.13), Mefenacet (B1.6.14) Fentrazamid, (B1.6.15) Thiazopyr, (B1.6.16) Tridopyr, (B1.6.17) Oxadiazone, (B1.6.18) Esprocarb, (B1.6.19) Pyributicarb (B1.6.20) Azimsulfuron, (B1.6.21) EP 913, (B1.6.22) Thenylchlor, (B1.6.23) Pentoxazone, (B1.6.24) Pyriminobac, (B1.6.25) OK 9701, (B1.6.26) Quizalofop/Quizalofop-P, (B1.627) Fenoxaprop/Fenoxaprop-P, (B1.6.28) Fluazifop/Fluazifop-P, (B1.6.29) Haloxyfop / Haloxyfop-P, (B1.6.30) Propaquizafop, (B1.6.31) Clodinafop, (B1.6.32) Cyhalofop, (B1.6.33) Sethoxydim, (B1.6.34) Cycloxydim, (B1.6.35) Clethodim, (B1.6.36) Clefoxidim, (B1.7.1) Isoproturon, (B1.7.2) Chlortuloron, (B1.7.3) Prosulfocarb, (B1.7.4) MON 48500, (B1.7.5) Diclofop/Diclofop-P, (B1.7.6) Imazamethabenz, (B1.7.7) Triasulfuron, (B1.7.8) Flupyrsulfuron, (B1.7.9) US 315, (B2.1.1) MCPA, (B2.1.2) 2,4-D (B2.2.1) Bromoxynil, (B2.3.1) Bentazone, (B2.3.2) Fluthiacet, (B2.3.3) Pyridate, (B2.3.4) Diflufenzopyr, (B2.3.5) Carfentrazone, (B2.3.6) Clopyralid, (B2.4.1) Halosulfuron, (B2.4.2) Thifensulfuron, (B2.4.3) Prosulfuron, (B2.4.4) Iodosulfuron, (B2.4.5) Tritosulfuron, (B2.4.6) Sulfosulfuron (B2.5.1) 2,4-D, (B2.5.2) MCPA, (B2.5.3) Bensulfuron, (B2.5.4) Methsulfuron, (B2.5.6) Acifluorfen, (B2.5.7) Bispyribac, (B2.5.8) Ethoxysulfuron, (B2.5.9) Cinosulfuron, (B2.5.10) Pyrazosulfuron, (B2.5.11) Imazosulfuron, (B2.5.12) Cyclosulfamuron, (B2.5.13) Chlorsulfuron, (B2.5.14) Bromobutide, (B2.5.15) Bentazon, (B2.5.16) Benfuresate, (B.2.5.17) Chlorimuron, (B2.6.1) Diflufenican, (B2.6.2) Flurtamone, (B2.6.3) Tribenuron, (B.2.6.4) Amidosulfuron, (B2.6.5) Mecoprop/Mecoprop-p, (B2.6.6) Dichlorprop/Dichlorprop-P, (B2.6.7) Fluroxypyr, (B2.6.8) Picloram, (B2.6.9) loxynil, (B2.6.10) Bifenox, (B2.6.11) Pyraflufen-ethyl, (B.2.6.12) Fluoroglycofen-ethyl, (B2.6.13) Cinidon-ethyl, (B2.6.14) Picolinofen, (B3.1) Glufosinate, (B3.2) Glyphosate, (B3.3.1) Imazapyr, (B3.3.2) Imazethapyr, (B3.3.3) Imazamethabenz, (B3.3.4) Imazamethabenz-methyl, (B3.3.5) Imazamox, (B3.3.6) Imazaquin und (B3.3.7) Imazapic bedeutet

2. Herbizid-Kombination nach Anspruch 1, **dadurch gekennzeichnet, daß** als Komponente (A) eine oder mehrere Verbindungen der Formel (A1) oder deren Salze,

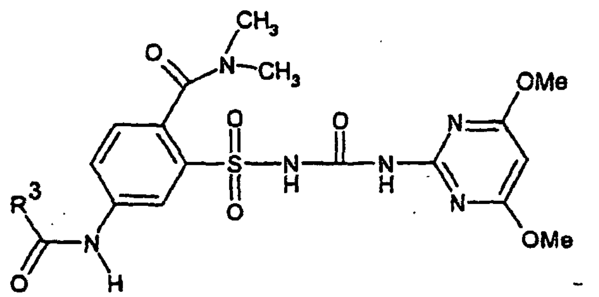

(A1)

worin $R^3$ die in Formel (I) genannte Bedeutung hat und Me = Methyl ist, enthalten ist

**3.** Herbizid-Kombinationen nach einem der Ansprüche 1 oder 2, **dadurch gekennzeichnet, daß** sie eine oder mehrere weitere Komponenten aus der Gruppe enthaltend Pflanzenschutzmittelwirkstoffe anderer Art, im Pflanzenschutz übliche Zusatzstoffe und Formulierungshilfsmittel enthalten.

**4.** Verfahren zur Bekämpfung von Schadpflanzen **dadurch gekennzeichnet, daß** man die Herbizide der Herbizid-Kombination, definiert gemäß einem oder mehreren der Ansprüche 1 bis 3, gemeinsam oder getrennt im Vorauflauf, Nachauflauf oder im Vor- und Nachauflauf auf die Pflanzen, Pflanzenteile, Pflanzensamen oder die Anbaufläche appliziert.

**5.** Verfahren nach Anspruch 4 zur selektiven Bekämpfung von Schadpflanzen in Pflanzenkulturen.

**6.** Verfahren nach Anspruch 5 zur Bekämpfung von Schadpflanzen in Getreide, insbesondere Mais.

**7.** Verwendung der nach einem der Ansprüche 1 bis 3 definierten Herbizid-Kombinationen zur Bekämpfung von Schadpflanzen.

## Claims

**1.** A herbicide combination comprising an effective content of components (A) and (B), where

(A) is one or more herbicides from the group of the compounds of the formula (I) or their salts

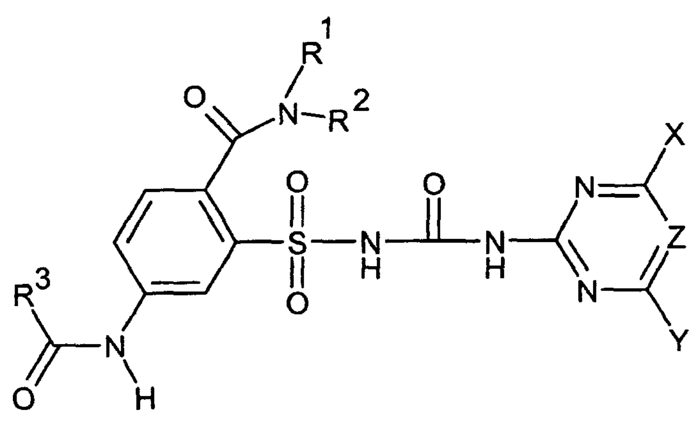

(I)

in which

$R^1$ is hydrogen or $(C_1-C_4)$alkyl,
$R^2$ is hydrogen or $(C_1-C_4)$alkyl,
$R^3$ is H, $(C_1-C_4)$alkyl, $(C_1-C_4)$alkoxy, $(C_2-C_4)$alkenoxy, $(C_2-C_4)$alkynoxy, $(C_3-C_6)$cycloalkyl, where each of

the 5 last-mentioned radicals is unsubstituted or substituted by one or more radicals from the group consisting of halogen, cyano, $(C_1-C_4)$alkoxy and $(C_1-C_4)$alkylsulfonyl,

one of the radicals X and Y is halogen, $(C_1-C_4)$alkyl, $(C_1-C_4)$alkoxy, $(C_1-C_4)$alkylthio, where each of the three last-mentioned radicals is unsubstituted or substituted by one or more radicals from the group consisting of halogen, $(C_1-C_4)$alkoxy and $(C_1-C_4)$alkylthio,

and the other of the radicals X and Y is $(C_1-C_4)$alkyl, $(C_1-C_4)$alkoxy or $(C_1-C_4)$alkylthio, where each of the three last-mentioned radicals is unsubstituted or substituted by one or more radicals from the group consisting of halogen, $(C_1-C_4)$alkoxy and $(C_1-C_4)$alkylthio,

Z is CH or N,

and

(B) one or more herbicides from the group of the compounds which consists of

(B1.1.1) alachlor, (B1.1.2) metolachlor, (B1.1.3) acetochlor, (B1.1.4) dimethenamid, (B1.1.5) pethoxamid, (B1.2.1) atrazine, (B1.2.2) simazine, (B1.2.3) cyanazine, (B1.2.4) terbuthylazine, (B1.2.5) metribuzin, (B1.2.6) isoxaflutole, (B1.2.7) fluthiamide, (B1.2.8) terbutryn, (B1.3.1 ) nicosulfuron, (B1.3.2) rimsulfuron, (B1.3.3) primisulfuron, (B1.4.1) pendimethalin, (B1.4.2) sulcotrione, (B1.4.3) dicamba, (B1.4.4) mesotrione, (B1.4.5) linuron, (B1.4.6) isoxachlortole, (B1.4.7) benoxacor, (B1.5.1) metosulam, (B1.5.2) flumetsulam, (B1.5.3) cloransulam, (B1.5.4) florasulam, (B1.6.1) molinate, (B1.6.2) thiobencarb, (B1.6.3) quinchlorac, (B1.6.4) propanil, (B1.6.5) pyribenzoxim, (B1.6.6) butachlor, (B1.6.7) pretilachlor, (B1.6.8) clomazone, (B1.6.9) oxadiargyl, (B1.6.10) oxaziclomefone, (B1.6.11) anilofos, (B1.6.12) cafenstrole, (B1.6.13) mefenacet, (B1.6.14) fentrazamid, (B1.6.15) thiazopyr, (B1.6.16) triclopyr, (B1.6.17) oxadiazone, (B1.6.18) esprocarb, (B1.6.19) pyributicarb, (B1.6.20) azimsulfuron, (B1.6.21) EP 913, (B1.6.22) thenylchlor, (B1.6.23) pentoxazone, (B1.6.24) pyriminobac, (B1.6.25) OK 9701, (B1.6.26) quizalofop/quizalofop-P, (B1.6.27) fenoxaprop/fenoxaprop-P, (B1.6.28) fluazifop/fluazifop-P, (B1.6.29) haloxyfop/haloxyfop-P, (B1.6.30) propaquizafop, (B1.6.31) clodinafop, (B1.6.32) cyhalofop, (B1.6.33) sethoxydim, (B1.6.34) cycloxydim, (B1.6.35) clethodim, (B1.6.36) clefoxidim, (B1.7.1) isoproturon, (B1.7.2) chlortuloron, (B1.7.3) prosulfocarb, (B1.7.4) MON 48500, (B1.7.5) diclofop/diclofop-P, (B1.7.6) imazamethabenz, (B1.7.7) triasulfuron, (B1.7.8) flupyrsulfuron, (B1.7.9) US 315, (B2.1.1) MCPA, (B2.1.2) 2,4-D, (B2.2.1) bromoxynil, (B2.3.1) bentazone, (B2.3.2) fluthiacet, (B2.3.3) pyridate, (B2.3.4) diflufenzopyr, (B2.3.5) carfentrazone, (B2.3.6) clopyralid, (B2.4.1) halosulfuron, (B2.4.2) thifensulfuron, (B2.4.3) prosulfuron, (B2.4.4) iodosulfuron, (B2.4.5) tritosulfuron, (B2.4.6) sulfosulfuron, (B2.5.1) 2,4-D, (B2.5.2) MCPA, (B2.5.3) bensulfuron, (B2.5.4) methsulfuron, (B2.5.6) acifluorfen, (B2.5.7) bispyribac, (B2.5.8) ethoxysulfuron, (B2.5.9) cinosulfuron, (B2.5.10) pyrazosulfuron, (B2.5.11) imazosulfuron, (B2.5.12) cyclosulfamuron, (B2.5.13) chlorsulfuron, (B2.5.14) bromobutide, (B2.5.15) bentazone, (B2.5.16) benfuresate, (B2.5.17) chlorimuron, (B2.6.1) diflufenican, (B2.6.2) flurtamone, (B2.6.3) tribenuron, (B2.6.4) amidosulfuron, (B2.6.5) mecoprop/mecoprop-p, (B2.6.6) dichlorprop/dichlorprop-P, (B2.6.7) fluroxypyr, (B2.6.8) picloram, (B2.6.9) loxynil, (B2.6.10) bifenox, (B2.6.11) pyraflufen-ethyl, (B2.6.12) fluoroglycofen-ethyl, (B2.6.13) cinidon-ethyl, (B2.6.14) picolinofen, (B3.1) glufosinate, (B3.2) glyphosate, (B3.3.1) imazapyr, (B3.3.2) imazethapyr, (B3.3.3) imazamethabenz, (B3.3.4) imazamethabenz-methyl, (B3.3.5) imazamox, (B3.3.6) imazaquin and (B3.3.7) imazapic.

2. The herbicide combination as claimed in claim 1, comprising, as component (A), one or more compounds of the formula (A1) or their salts,

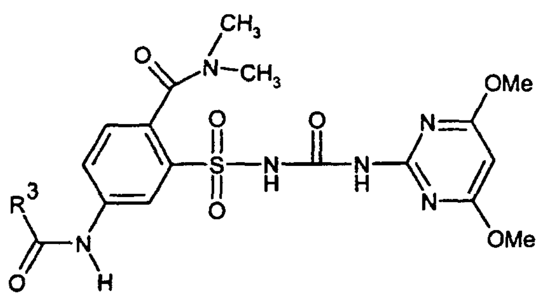

(A1)

in which $R^3$ has the meaning mentioned in formula (I) and Me = methyl.

3. The herbicide combination as claimed in either of claims 1 and 2, which comprises one or more further components

from the group comprising crop protection active substances of a different type, additives customary in crop protection and formulation auxiliaries.

**4.** A method of controlling harmful plants which comprises applying the herbicides of the herbicide combination, as defined in one or more of claims 1 to 3, jointly or separately, pre-emergence, post-emergence or pre- and post-emergence to the plants, parts of the plants, seeds of the plants or the area under cultivation.

**5.** The method as claimed in claim 4 for the selective control of harmful plants in plant crops.

**6.** The method as claimed in claim 5 for the control of harmful plants in cereals, in particular corn.

**7.** The use of the herbicide combinations as defined in one of claims 1 to 3 for the control of harmful plants.

## Revendications

**1.** Combinaison herbicide ayant une teneur efficace en composant (A) et (B),

(A) un ou plusieurs herbicides pris dans le groupe des composés de formule (I) ou leurs sels

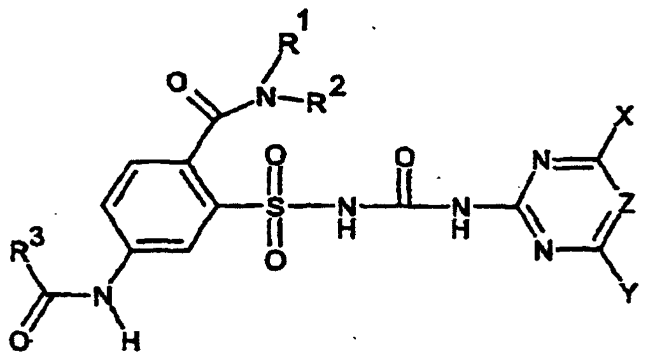

(I)

où

| | |
|---|---|
| $R^1$ | représente un atome d'hydrogène ou un groupe alkyle en $C_1$-$C_4$, |
| $R^2$ | représente un atome d'hydrogène ou un groupe alkyle en $C_1$-$C_4$, |
| $R^3$ | représente un atome d'hydrogène, un groupe alkyle en $C_1$-$C_4$, alkoxy en $C_1$-$C_4$, alcénoxy en $C_2$-$C_4$, alcynoxy $C_2$-$C_4$, cycloalkyle en $C_3$-$C_6$, chacun des 5 derniers restes cités étant non substitué ou substitué par un ou plusieurs restes pris dans le groupe comprenant halogène, cyano, alkoxy en $C_1$-$C_4$ et (alkyl en $C_1$-$C_4$)sulfonyle, |
| un des restes | X et Y représentent un atome halogène, un groupe alkyle en $C_1$-$C_4$, alkoxy en $C_1$-$C_4$, (alkyl en $C_1$-$C_4$)thio, chacun des trois derniers restes cités est non substitué ou substitué par un ou plusieurs restes pris dans le groupe comprenant halogène, alkoxy $C_1$-$C_4$ et (alkyl en $C_1$-$C_4$)thio, |
| et les autres restes | X et Y représentent un groupe alkyle en $C_1$-$C_4$, alkoxy en $C_1$-$C_4$ ou (alkyl en $C_1$-$C_4$) thio, chacun des trois derniers restes cités est non substitué ou substitué par un ou plusieurs restes pris dans le groupe comprenant halogène, alkoxy $C_1$-$C_4$ et (alkyl en $C_1$-$C_4$) thio, et |
| Z | représente un groupe CH ou N, |

et

(B) un ou plusieurs herbicides du groupe des composés comprenant

(B1.1.1) alachlor, (B1.1.2) metolachlor, (B1.1.3) acetochlor, (B1.1.4) dimethenamid, (B1.1.5) pethoxamid, (B1.2.1) atrazin, (B1.2.2) simazin, (B1.2.3) cyanazin, (B1.2.4) terbuthylazin, (B1.2.5) metribuzin, (B1.2.6) isoxaflutole, (B1.2.7) fluthiamid, (B1.2.8) terbutryn, (B1.3.1) nicosulfuron, (B1.3.2) rimsulfuron, (B1.3.3) primisulfuron, (B1.4.1) pendimethalin, (B1.4.2) sulcotrione, (B1.4.3) dicamba, (B1.4.4) mesotrione, (B1.4.5) linuron,

(B1.4.6) isoxachlortole, (B1.4.7) benoxacor, (B1.5.1) metosulam, (B1.5.2) flumetsulam, (B1.5.3) cloransulam, (B1.5.4) florasulam, (B1.6.1) molinate, (B1.6.2) thiobencarb, (B1.6.3) quinchlorac, (B1.6.4) propanil, (B1.6.5) pyribenzoxim, (B1.6.6) butachlor, (B1.6.7) pretilachlor, (B1.6.8) clomazone, (B1.6.9) oxadiargyl, (B1.6.10) oxaziclomefone, (B1.6.11) anilofos, (B1.6.12) cafenstrole, (B1.6.13) mefenacet, (B1.6.14) fentrazamid, (B1.6.15) thiazopyr, (B1.6.16) triclopyr, (B1.6.17) oxadiazone, (B1.6.18) esprocarb, (B1.6.19) pyributicarb, (B1.6.20) azimsulfuron, (B1.6.21) EP 913, (B1.6.22) thenylchlor, (B1.6.23) pentoxazone, (B1.6.24) pyriminobac, (B1.6.25) OK 9701, (B1.6.26) quizalofop/quizalofop-P, (B1.6.27) fenoxaprop/fenoxaprop-P, (B1.6.28) fluazifop/fluazifop-P, (B1.6.29) haloxyfop/haloxyfop-P, (B1.6.30) propaquizafop, (B1.6.31) clodinafop, (B1.6.32) cyhalofop, (B1.6.33) sethoxydim, (B1.6.34) cydoxydim, (B1.6.35) clethodim, (B1.6.36) clefoxidim, (B1.7.1) isoproturon, (B1.7.2) chlortuloron, (B1.7.3) prosulfocarb, (B1.7.4) MON 48500, (B1.7.5) diclofop/diclofop-P, (B1.7.6) imazamethabenz, (B1.7.7) triasulfuron. (B1.7.8) flupyrsulfuron, (B1.7.9) US 315, (B2.1.1) MCPA, (B2.1.2) 2,4-D, (B2.2.1) bromoxynil, (B2.3.1) bentazone. (B2.3.2) fluthiacet, (B2.3.3) pyridate, (B2.3.4) diflufenzopyr, (B2.3.5) carfentrazone, (B2.3.6) clopyralid, (B2.4.1) halosulfuron, (B2.4.2) thifensulfuron, (B2.4.3) prosulfuron, (B2.4.4) iodosulfuron, (B2.4.5) tritosulfuron, (B2.4.6) sulfosulfuron (B2.5.1) 2.4-D, (B2.5.2) MCPA, (B2.5.3) bensulfuron, (B2.5.4) methsulfuron, (B2.5.6) acifluorfen, (B2.5.7) bispyribac, (B2.5.8) ethoxysulfuron, (B2.5.9) cinosulfuron. (B2.5.10) pyrazosulfuron, (B2.5.11) imazosulfuron, (B2.5.12) cyclosulfamuron, (B2.5.13) chlorsulfuron, (B2.5.14) bromobutide, (B2.5.15) bentazon, (B2.5.16) benfuresate. (B.2.5.17) chlorimuron, (B2.6.1) diflufenican, (B2.6.2) flurtamone, (B2.6.3) tribenuron, (B.2.6.4)amidosulfuron, (B2.6.5) mecoprop/mecoprop-p, (B2.6.6) dichlorprop/dichlorprop-p, (B2.6.7) fluroxypyr, (B2.6.8) picloram, (B2.6.9) ioxynil, (B2.6.10) bifenox, (B2.6.11) pyraflufen-ethyl, (B.2.6.12) fluoroglycofen-ethyl, (B2.6.13) cinidon-ethyl, (B2.6.14) picolinofen, (B3.1) glufosinate, (B3.2) glyphosate, (B3.3.1) imazapyr, (B3.3.2) imazethapyr, (B3.3.3) imazamethabenz, (B3.3.4) imazamethabenz-methyl, (B3.3.5) imazamox, (B3.3.6) imazaquin et (B3.3.7) imazapic.

2. Combinaison herbicide selon la revendication 1, **caractérisée en ce qu'**elle contient en tant que composant (A) un ou plusieurs composes de formule (A1) ou leurs sels

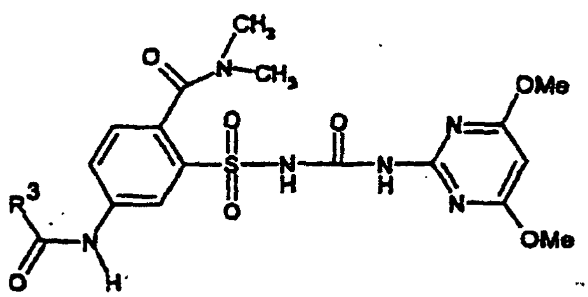

(A1)

où $R^3$ possède la signification donnée à la formule (I) et Me = méthyle.

3. Combinaison herbicide selon l'une des revendications 1 ou 2, **caractérisée en ce qu'**elle contient un ou plusieurs autres composants pris dans le groupe comprenant des substances actives phytosanitaires d'autre type, des adjuvants et des adjuvants de formulation usuels dans le domaine phytosanitaire.

4. Procédé pour la lutte contre les mauvaises herbes, **caractérisé en ce qu'**on applique les herbicides de la combinaison herbicide, définie selon une ou plusieurs des revendications 1 à 3, conjointement ou séparément en prélevée, en post-levée ou en prélevé et en post-levée sur les plantes, des parties de plantes, la semence ou la surface cultivable.

5. Procédé selon la revendication 4, pour la lutte sélective contre les mauvaises herbes dans la culture de plantes.

6. Procédé selon la revendication 5, pour la lutte sélective contre les mauvaises herbes dans la culture de céréales, notamment le mais.

7. Utilisation de la combinaison d'herbicides définie selon l'une des revendications 1 à 3, pour la lutte contre les mauvaises herbes.